# EUROPEAN PATENT APPLICATION

(11) **EP 3 570 219 A1**
(43) Date of publication of application: **20.11.2019**
(21) Application number: 19169386.0
(22) Date of filing: 16.04.2019
(51) Int. Cl.: G06N 3/00, G06N 3/04, G06N 3/08

(54) **CONTROL SYSTEM, LEARNING DATA CREATION APPARATUS, LEARNING APPARATUS, AND JUDGMENT APPARATUS**

(30) Priority: 14.05.2018 JP 2018092840
(71) Applicant: OMRON Corporation, Shiokoji-dori, Shimogyo-ku Kyoto-shi Kyoto 600-8530 (JP)
(72) Inventor: ANDO, Tanichi, Aichi, 485-0802 (JP)
(74) Representative: Horn Kleimann Waitzhofer Patentanwälte PartG mbB

(57) **Abstract**

The validity of the output from an AI is judged. A control system includes a control apparatus and a judgment apparatus. The control apparatus includes a controller including a control AI, and the judgment apparatus includes a judgment unit including a judgment AI configured to judge the validity of an output from the control AI. A learning result of second machine learning for procuring a judgment capability for judging the validity is set in the judgment AI. Second machine learning is performed using learning data including a combination of judgment material data for learning that is created from data relating to an output from an AI on which first machine learning is being executed or data relating to an output from an AI in which the learning result of the first machine learning is set, and training data indicating a correct value of a result of judgment of the validity based on the judgment material data for learning. The judgment material data for learning is selected, based on a specification of the judgment capability, from data relating to an output from an AI on which the first machine learning is being executed and data relating to an output from an AI in which the learning result of the first machine learning is set.

## Description

### CROSS-REFERENCES TO RELATED APPLICATIONS

This application claims priority to Japanese Patent Application No. 2018-092840 filed May 14, 2018, the entire contents of which are incorporated herein by reference.

### FIELD

The present invention relates to technology for judging the validity of the output from an artificial intelligence.

### BACKGROUND

In order to make an artificial intelligence procure intellectual capabilities such as for classifying data, for example, machine learning is performed. Also, machine learning is performed for the purpose of procuring the capability for controlling operations or states of an object (control capability).

However, an artificial intelligence does not always bring about desirable results. That is, the artificial intelligence may return incorrect or inappropriate output data, make an object perform an unintended operation, or cause an object to fall into an intended state.

JP H5-225163A (Patent Document 1) discloses a technique for evaluating the certainty of a node value output from a neutral network depending on whether or not a node value input to the neutral network matches or is similar to an input node value of learning data.

JP H5-225163A is an example of background art.

### SUMMARY

Patent Document 1 merely discloses a specific limited technique for evaluating the certainty of a node value output from a neutral network.

An object of the present invention is to judge the validity of the output from an artificial intelligence.

According to a first aspect of the present invention, a control system includes a control apparatus and a judgment apparatus, and the control apparatus includes a controller that includes a control artificial intelligence configured to generate output data for controlling an object based on input data, the judgment apparatus includes an acquisition unit configured to acquire judgment material data that is used to judge a validity of an output from the control artificial intelligence and a judgment unit that includes a judgment artificial intelligence configured to judge the validity based on the judgment material data, a learning result of first machine learning for procuring a control capability for controlling the object is set in the control artificial intelligence, a learning result of second machine learning for procuring a judgment capability for judging the validity is set in the judgment artificial intelligence, the second machine learning is performed using learning data that includes a combination of judgment material data for learning that is created from data relating to an output from an artificial intelligence on which the first machine learning is being executed or data relating to an output from an artificial intelligence in which the learning result of the first machine learning is set, and training data indicating a correct value of a result of judgment of the validity based on the judgment material data for learning, and the judgment material data for learning is selected, based on (depending on) a specification of the judgment capability, from data relating to an output from an artificial intelligence on which the first machine learning is being executed or data relating to an output from an artificial intelligence in which the learning result of the first machine learning is set. Note that "data relating to an output from an AI" may be "data output by an AI", for example, but is not limited thereto.

This control system judges the validity of the output from a control artificial intelligence based on the judgment material data, which is data relating to the output from the control artificial intelligence. The capability for making such a judgment is procured through second machine learning based on learning data including judgment material data for learning selected based on the specification of this capability and training data indicating a correct value of the result of judgment of the validity of the output from the control artificial intelligence that corresponds to this judgment material data, and this learning result is set in a judgment artificial intelligence. Thus, according to this control system, it is possible to judge the validity of the output from the control artificial intelligence.

In the control system according to the first aspect, the judgment apparatus may further include a warning unit configured to issue a warning if it is judged that the output from the control artificial intelligence is not valid. This control system can issue a warning if it is judged that the output from the control artificial intelligence is not valid. This makes it possible to prevent an object from being controlled based on the invalid data output from the control artificial intelligence, or quickly detect and handle an adverse effect resulting from the invalid output data. That is, this control system can ensure high safety while controlling an object utilizing a control artificial intelligence.

In the control system according to the first aspect, the judgment apparatus may further include an intervention unit configured to intervene in a control of the object by the control apparatus if it is judged that the output from the control artificial intelligence is not valid.

This control system can intervene in a control if it is judged that the output from the control artificial intelligence is not valid. This makes it possible to prevent an object from being controlled based on the invalid data output from the control artificial intelligence, or quickly detect and handle an adverse effect resulting from the invalid output data. That is, this control system can ensure high safety while controlling an object utilizing a control artificial intelligence.

According to a second aspect of the present invention, a learning data creation apparatus is a learning data creation apparatus configured to create learning data that is used in second machine learning for procuring a judgment capability for judging a validity of an output from an artificial intelligence in which a learning result of first machine learning is set, and the learning data creation apparatus includes an acquisition unit configured to acquire data relating to an output from a first artificial intelligence on which the first machine learning is being executed or data relating to an output from a second artificial intelligence in which the learning result of the first machine learning is set, and a creation unit configured to create learning data including a combination of judgment material data for learning that is data to be input to a judgment artificial intelligence that is subjected to the second machine learning, and training data indicating a correct value of data output from the judgment artificial intelligence in correspondence with the input data, the creation unit creating the learning data based on the data acquired by the acquisition unit and a specification of the judgment capability.

According to this learning data creation apparatus, it is possible to create learning data that can be used in second machine learning for procuring a capability for judging the validity of the output from an artificial intelligence. Also, the type of judgment to be made by this capability can be selected using the specification of the capability.

In the learning data creation apparatus according to the second aspect, the judgment material data for learning may include at least one of (i) data output from the first artificial intelligence or the second artificial intelligence, (ii) observation data expressing a result of observation of an operation or a state of an object controlled based on the data output from the first artificial intelligence or the second artificial intelligence, and (iii) input data that has caused the second artificial intelligence to generate output data. According to this learning data creation apparatus (referred to as a "learning data creation apparatus" according to a third aspect of the present invention, hereinafter), learning data can be created using at least one of data according to (i) to (iii) above as judgment material data for learning.

In the learning data creation apparatus according to the third aspect, the creation unit may also be configured to create the judgment material data for learning based on the observation data expressing the result of observation of the operation or the state of the object controlled based on the data output from the first artificial intelligence, and to create training data indicating that the output from the first artificial intelligence is not valid. According to this learning data creation apparatus, it is possible to create learning data for procuring a capability for judging the validity of the output from an artificial intelligence based on the operation or the state of the object controlled based on the data output from the artificial intelligence.

In the learning data creation apparatus according to the third aspect, the creation unit may also be configured to create the judgment material data for learning based on the data output from the first artificial intelligence, and to create training data indicating that the output from the first artificial intelligence is not valid.

According to this learning data creation apparatus, it is possible to create learning data for procuring a capability for judging the validity of the output from an artificial intelligence based on whether or not data output from the artificial intelligence corresponds to invalid output data selected based on data output during learning.

In the learning data creation apparatus according to the third aspect, the creation unit may also be configured to create the judgment material data for learning based on the data output from the second artificial intelligence, and to create training data indicating that the output from the second artificial intelligence is valid.

According to this learning data creation apparatus, it is possible to create learning data for procuring a capability for judging the validity of the output from an artificial intelligence based on whether or not data output from the artificial intelligence corresponds to valid output data selected based on the output data seen after completion of learning.

In the learning data creation apparatus according to the third aspect, the creation unit may also be configured to create the judgment material data for learning based on input data that has caused the second artificial intelligence to generate incorrect output data, and to create training data indicating that the output from the second artificial intelligence is not valid.

According to this learning data creation apparatus, it is possible to create learning data for procuring a capability for judging the validity of the output from an artificial intelligence based on whether or not data input to the artificial intelligence corresponds to input data for which the second artificial intelligence is not suited.

In the learning data creation apparatus according to the third aspect, the creation unit may also be configured to create the judgment material data for learning based on the input data that has caused the second artificial intelligence to generate correct output data, and to create training data indicating that the output from the second artificial intelligence is valid.

According to this learning data creation apparatus, it is possible to create learning data for procuring a capability for judging the validity of the output from an artificial intelligence based on whether or not data input to the artificial intelligence corresponds to input data for which the second artificial intelligence is suited.

The learning data creation apparatus according to the second aspect or the third aspect may further include a controller configured to control the data acquired by the acquisition unit and the learning data created by the creation unit, based on the specification of the judgment capability. According to this learning data creation apparatus, it is possible to create learning data for procuring a desired judgment capability that can be set through the specification.

According to a fourth aspect of the present invention, a learning apparatus includes an acquisition unit configured to acquire learning data that is used in second machine learning for procuring a judgment capability for judging a validity of an output from an artificial intelligence in which a learning result of first machine learning is set, and a learning unit configured to perform the second machine learning for a judgment artificial intelligence using the learning data, in which the learning data includes a combination of judgment material data for learning that is data to be input to the judgment artificial intelligence and training data indicating a correct value of data output from the judgment artificial intelligence in correspondence with the input data, and the learning data is created based on a specification of the judgment capability and data relating to an output from a first artificial intelligence on which the first machine learning is being executed or data relating to an output from a second artificial intelligence in which the learning result of the first machine learning is set.

According to this learning apparatus, it is possible to perform second machine learning for procuring a capability for judging the validity of the output from an artificial intelligence. Also, the type of judgment to be made by this capability can be selected using the specification of the capability.

According to a fifth aspect of the present invention, a judgment apparatus includes an acquisition unit configured to acquire data relating to an output from an artificial intelligence in which a learning result of first machine learning is set, and a judgment unit including a judgment artificial intelligence configured to receive input data that is based the data acquired by the acquisition unit and judge a validity of the output from the artificial intelligence, in which a learning result of second machine learning for procuring a judgment capability for judging the validity is set in the judgment artificial intelligence, the second machine learning is performed using learning data including a combination of judgment material data for learning that is created from data relating to an output from a first artificial intelligence on which the first machine learning is being executed or data relating to an output from a second artificial intelligence in which the learning result of the first machine learning is set, and training data indicating a correct value of a result of judgment of the validity based on the judgment material data for learning, and the judgment material data for learning is selected, based on the judgment capability, from data relating to an output from an artificial intelligence on which the first machine learning is being executed or data relating to an output from an artificial intelligence in which the learning result of the first machine learning is set. According to this judgment apparatus, it is possible to judge the validity of the output from an artificial intelligence. Also, the type of judgment to be made can be selected using the specification.

The judgment apparatus according to the first aspect of the present invention may further include a warning unit configured to issue a warning if it is judged that the output from the artificial intelligence is not valid. This judgment apparatus can issue a warning if it is judged that the output from the artificial intelligence is not valid. This makes it possible to prevent an artificial intelligence from supplying invalid output data to the outside, or quickly detect and handle an adverse effect resulting from the invalid output data. That is, this judgment apparatus can ensure high safety while utilizing data output from an artificial intelligence.

In the judgment apparatus according to the fifth aspect of the present invention, the artificial intelligence may be configured to generate output data for controlling an object based on input data, and the judgment apparatus may further include an intervention unit configured to intervene in a control of the object based on the output from the artificial intelligence if it is judged that the output from the artificial intelligence is not valid.

This judgment apparatus can intervene in a control if it is judged that the output from the artificial intelligence is not valid. This makes it possible to prevent an object from being controlled based on invalid data output from the artificial intelligence, or quickly detect and handle an adverse effect resulting from the invalid output data. That is, this judgment apparatus can ensure high safety while controlling an object utilizing an artificial intelligence.

According to the present invention, it is possible to judge the validity of the output from an artificial intelligence.

### BRIEF DESCRIPTION OF THE DRAWINGS

FIG. 1 is a block diagram illustrating an application example of a control system according to an embodiment.
FIG. 2 is a block diagram illustrating a learning system configured to perform second machine learning for a judgment AI (Artificial Intelligence) shown in FIG. 1.
FIG. 3 is a block diagram illustrating a hardware configuration of a second learning data creation apparatus according to an embodiment.
FIG. 4 is a block diagram illustrating the second learning data creation apparatus according to an embodiment.
FIG. 5 is a flowchart illustrating operations of the learning data creation apparatus shown in FIG. 4.
FIG. 6 is a block diagram illustrating a machine learning system to which first creation processing shown in FIG. 5 can be applied.
FIG. 7 is a flowchart illustrating operations of the machine learning system shown in FIG. 6.
FIG. 8 is a block diagram illustrating a machine learning system to which second creation processing shown in FIG. 5 can be applied.
FIG. 9 is a flowchart illustrating operations of the machine learning system shown in FIG. 8.
FIG. 10 is a block diagram illustrating a machine learning system to which third creation processing shown in FIG. 5 can be applied.
FIG. 11 is a flowchart illustrating operations of the machine learning system shown in FIG. 10.
FIG. 12 is a block diagram illustrating a machine learning system including the second learning data creation apparatus shown in FIG. 4.
FIG. 13 is a block diagram illustrating the second learning data creation apparatus according to a modification.
FIG. 14 is a block diagram illustrating a second learning apparatus shown in FIG. 6.
FIG. 15 is a block diagram illustrating a judgment apparatus that utilizes the learning result of machine learning performed by the second learning apparatus shown in FIG. 6.

### DETAILED DESCRIPTION

Hereinafter, an embodiment (also referred to as "the present embodiment" hereinafter) according to one aspect of this disclosure will be described with reference to the drawings.

Note that hereinafter, the same or similar reference numerals are given to elements that are the same or similar to elements that have already been described, and a redundant description will, in general, be omitted.

### §1 Application Example

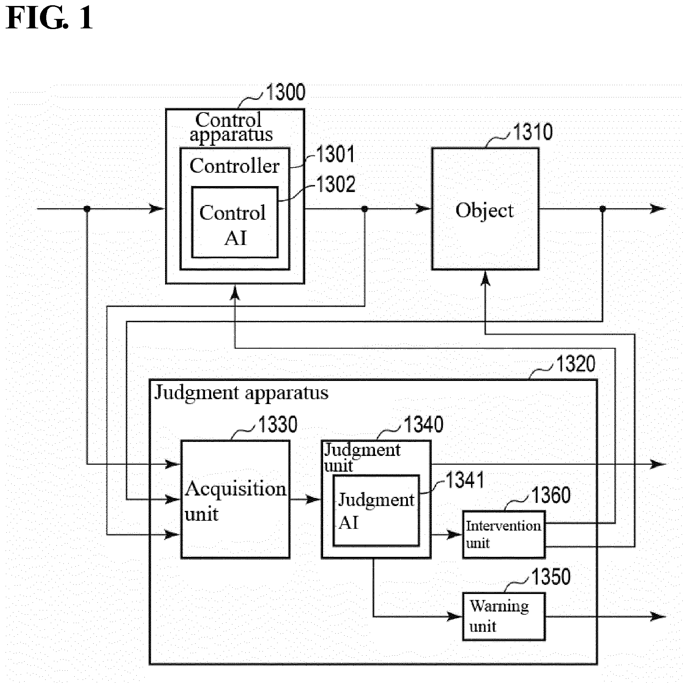

First, one application example of the present embodiment will be described with reference to FIG. 1. FIG. 1 schematically shows an application example of a control system according to the present embodiment. This control system may be applied to control a production apparatus installed in a production line, for example. This control system controls an object such as the above-described production apparatus based on an output from an AI (simply referred to as a "control AI" hereinafter), judges the validity of the output from this control AI using another AI (simply referred to as a "judgment AI" hereinafter), displays the result of judgment, and issues a warning and/or intervenes in the control based on the result of judgment. Herein, intervention in the control may include suspending a control by the control AI and stopping operations of an object, for example.

As shown in FIG. 1, the control system according to the application example includes a control apparatus 1300, an object 1310, and a judgment apparatus 1320. Note that it is presumed in FIG. 1 that machine learning has been executed on the control AI and the judgment AI, that is, it is presumed that both AIs are in an operation stage not in a learning stage, and thus configurations required for performing machine learning for the control AI and/or the judgment AI are omitted.

The control apparatus 1300 controls an operation or a state of the object 1310 based on an output from the control AI 1302. The control apparatus 1300 includes a controller 1301.

The controller 1301 may be a (hardware) processor and a memory, for example. Note that the processor is typically a CPU (Central Processing Unit) and/or a GPU (Graphics Processing Unit) herein, but is not limited thereto, and may be a microcomputer, an FPGA (Field Programmable Gate Array), or a DSP (Digital Signal Processor), for example.

The controller 1301 includes the control AI 1302. The controller 1301 receives data from the outside, and directly gives the data to the control AI 1302 or performs processing such as conversion and then gives the resulting data to the control AI 1302. The controller 1301 then receives output data corresponding to the input data from the control AI 1302. The controller 1301 directly transfers the data output from the control AI 1302, or performs processing such as conversion and then transfers the resulting data, to the object 1310 as a control value.

The control AI 1302 may be implemented by a processor and a memory of the controller 1301, for example. The control AI 1302 receives input data from the controller 1301, generates output data for controlling an operation or a state of the object 1310 based on this input data, and returns the generated output data to the controller 1301. A learning result of first machine learning for procuring a control capability for controlling the object 1310 or the same type of object is set in the control AI 1302. Herein, the learning result of first machine learning indicates the ultimate model parameters obtained through the first machine learning. Model parameters may include a weight matrix representing the weights of edges between units and bias vectors representing biases of units, for example. Note that the control AI 1302 corresponds to a second artificial intelligence according to an embodiment. The control AI 1302 may be a statistical model such as a neutral network, for example. Also, the first machine learning may be reinforcement learning, for example.

The object 1310 may be any apparatus that is directly controlled by the control apparatus 1300, or any apparatus that is indirectly controlled by being affected by an operation or a state of this apparatus. Specifically, the object 1310 may be a production apparatus (a robot or a safety apparatus, for example) that is installed in a production line, or a vehicle (an automated or a semi-automated driving vehicle), for example. If the object 1310 is a vehicle, for example, the control apparatus 1300 may control steering and acceleration/deceleration of the object 1310, or any other operation or state of the object 1310.

The judgment apparatus 1320 acquires data relating to an output from the control AI 1302 as judgment material data. Here, data relating to an output from the control AI 1302 is not limited to the data output from the control AI 1302, and may also include observation data expressing the result of an observation of the operation or the state of the object 1310 controlled based on this output data and input data that is the source of this output data. The observation data can be generated by observing operations or states of the object 1310 using various sensors. The type of data to be acquired as judgment material data is selected based on the specification of a judgment capability required for the judgment AI 1341. Required judgment capabilities are classified into three types and details will be described in terms of types in the description of an embodiment, which will be described later.

The judgment apparatus 1320 directly gives this judgment material data, or performs processing such as conversion and then gives this judgment material data to the judgment AI 1341, and judges the validity of an output from the control AI 1302. The judgment apparatus 1320 may output (display, print, or output sound, for example), using an output apparatus (not shown), the result of judgment of the validity of the output from the control AI 1302, issue a warning or intervene in the control based on the result of judgment. The judgment apparatus 1320 includes an acquisition unit 1330, a judgment unit 1340, a warning unit 1350, and an intervention unit 1360.

The acquisition unit 1330 may be an input apparatus, a communication interface, or an external interface, for example. The acquisition unit 1330 acquires judgment material data used to judge the validity of an output from the control AI 1302 or the same type of AI. Although the acquisition unit 1330 acquires both data output from the control apparatus 1300 and data obtained by observing the object 1310 in the example shown in FIG. 1, the acquisition unit 1330 may also acquire only one of the output data and the observation data. The acquisition unit 1330 transfers the judgment material data to the judgment unit 1340.

The judgment unit 1340 may be a processor and a memory, for example. The judgment unit 1340 includes the judgment AI 1341. The judgment unit 1340 receives the judgment material data from the acquisition unit 1330, and directly gives the judgment material data to the judgment AI 1341 or performs processing such as conversion and then gives the resulting data to the judgment AI 1341. The judgment unit 1340 then receives output data corresponding to the input data (judgment material data) from the judgment AI 1341. The judgment unit 1340 directly transfers the data output from the judgment AI 1341 to an output apparatus (not shown), the warning unit 1350, and/or the intervention unit 1360, or performs processing such as conversion and then transfers the resulting data to an output apparatus (not shown), the warning unit 1350, and/or the intervention unit 1360, as the result of judgment.

The judgment AI 1341 may be implemented by a processor and a memory of the judgment unit 1340, for example. The judgment AI 1341 receives judgment material data from the judgment unit 1340, judges the validity of the output from the control AI 1302 based on this judgment material data, and returns the result of judgment to the judgment unit 1340. A learning result of second machine learning (ultimate model parameters obtained through second machine learning) for procuring a judgment capability for judging the validity (appropriateness) of an output from the control AI 1302 or the same type of control AI is set in the judgment AI 1341. Note that the judgment AI 1341 corresponds to a fourth artificial intelligence according to an embodiment. The judgment AI 1341 may be a statistical model such as a neutral network, for example. The second machine learning may be supervised learning, for example.

The warning unit 1350 may be a warning apparatus such as a buzzer or a speaker, or an interface for connection to an external warning apparatus, for example. The judgment unit 1340 communicates the judgment result to the warning unit 1350. If a judgment result indicating that the output from the control AI 1302 is not valid is communicated to the warning unit 1350, the warning unit 1350 issues a warning. The warning may involve visually or aurally informing a human being (user, administrator, or the like of the object) that the output from the control AI 1302 is not valid, using an image, light, or sound, for example, or informing the control apparatus 1300 or the object 1310 that the output from the control AI 1302 is not valid. Specifically, the warning unit 1350 may light an icon on a meter panel or promote relearning of the control AI 1302. The human being, the apparatus 1300, or the object 1310 that receives a warning can avoid an undesirable result by stopping or resetting control of the object 1310, entrusting control of the operation or the state of the object 1310 to a human being or another control apparatus (for example, a control apparatus that executes a control program that has been manually coded), or performing relearning (retraining) of the control AI 1302.

The intervention unit 1360 may be a processor and a memory, for example. The judgment unit 1340 communicates the judgment result to the intervention unit 1360. If a judgment result indicating that the output from the control AI 1302 is not valid is communicated to the intervention unit 1360, the intervention unit 1360 intervenes in the control of the operation or the state of the object 1310. Intervention may involve stopping or resetting control of the operation or the state of the object 1310, or entrusting control of the operation or the state of the object 1310 to a human being or another control apparatus (for example, a control apparatus that executes a control program that has been manually coded). Alternatively, the intervention unit 1360 may stop the operation of the object 1310, restrict the operation such that a control value given to the object 1310 is in an allowable range, or corrects the operation such that a control value is in an allowable range.

The warning unit 1350 may also be removed from the judgment apparatus 1320. Specifically, the warning unit 1350 may also be incorporated in the object 1310 or another apparatus, or may not be present at all in the control system. Similarly, the intervention unit 1360 may also be removed from the judgment apparatus 1320. Specifically, the intervention unit 1360 may also be incorporated in the object 1310 or another apparatus, or may not be present at all in the control system.

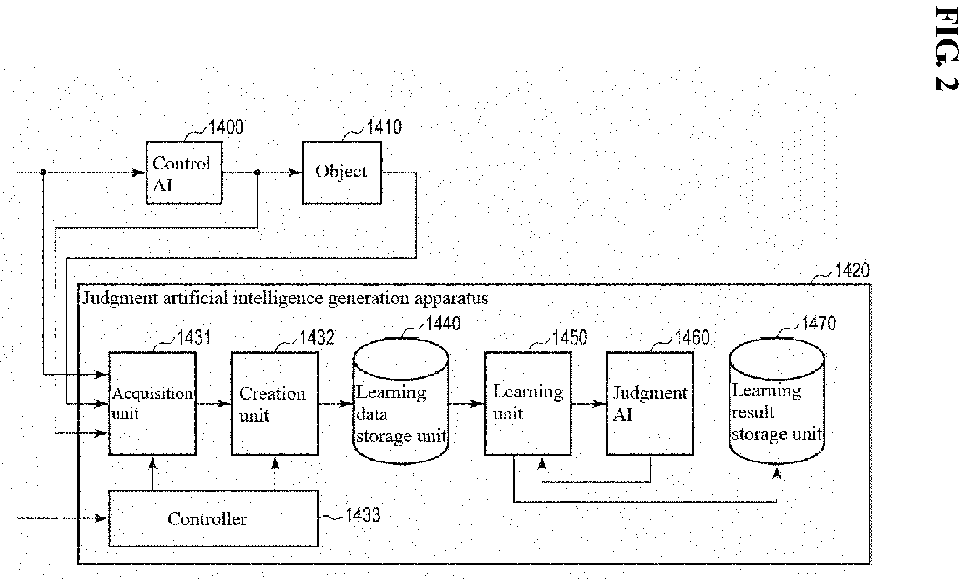

The above-described second machine learning may be performed by a learning system as shown in FIG. 2. The learning system shown in FIG. 2 includes a control AI 1400, an object 1410, and a judgment artificial intelligence generation apparatus 1420. Note that learning data for second machine learning is connected in parallel to first machine learning for the control AI 1400, and the second machine learning is performed each time learning data is collected, in the example shown in FIG. 2. However, second machine learning may also be performed after first machine learning has completed, that is, after collection of learning data for second machine learning has ended. Also, learning data for second machine learning may be created from data relating to outputs not only from the control AI 1400 on which first machine learning is being executed but also from an AI in which a learning result of first machine learning is set.

The control AI 1400 may be implemented by a processor and a memory, for example. The control AI 1400 receives input data, and generates output data for controlling an operation or a state of the object 1410 based on this input data. The control AI 1400 is currently subjected to first machine learning. Note that the control AI 1400 corresponds to a first artificial intelligence according to an embodiment. The above-described control AI 1302 may be the control AI 1400 that has completed first machine learning, or may be another AI in which the learning result of first machine learning is set. Model parameters set in the control AI 1400 may be updated by a learning apparatus (not shown) according to the progress of the first machine learning. The control AI 1400 may be a statistical model such as a neutral network, for example.

The object 1410 may be any apparatus that is directly controlled by data output from the control AI 1400, or any apparatus that is indirectly controlled by being affected by an operation or a state of this apparatus. However, the object 1410 is not necessarily the same as the object 1310 described above, may also be the same type of apparatus, or a simulation model.

The judgment artificial intelligence generation apparatus 1420 creates learning data used in second machine learning, and performs second machine learning. The judgment artificial intelligence generation apparatus 1420 includes an acquisition unit 1431, a creation unit 1432, a controller 1433, a learning data storage unit 1440, a learning unit 1450, a judgment AI 1460, and a learning result storage unit 1470.

The acquisition unit 1431 may be an input apparatus, a communication interface, or an external interface, for example. The acquisition unit 1431 acquires, as judgment material data for learning, data designated by the controller 1433 based on the specification of a judgment capability required for the judgment AI 1460, from data output from the control AI 1400, observation data expressing the result of an observation of an operation or a state of the object 1410 controlled based on this output data, and input data that is the source of this output data. The acquisition unit 1431 transfers the judgment material data for learning to the creation unit 1432.

The creation unit 1432 may be a processor and a memory, for example. The creation unit 1432 receives the judgment material data for learning from the acquisition unit 1431, and creates learning data for procuring a judgment capability required for the judgment AI 1460 based on this judgment material data for learning. Here, "procuring" may mean for example developing, creating or providing. The learning data includes judgment material data for learning that corresponds to input data for learning (for example, values given to the input nodes of a neutral network serving as the judgment AI 1460 (which corresponds to a third artificial intelligence according to these embodiments) on which second machine learning is executed, or values given to the input nodes of another statistical model), and training data indicating a correct value of the result of judgment of the validity of the output from the control AI 1400 based on this judgment material data for learning. Which value the creation unit 1432 sets as training data may be controlled by the controller 1433.

The controller 1433 may be a processor and a memory, for example. The controller 1433 receives specification data indicating the specification of the judgment capability required for the judgment AI 1460, and controls the acquisition unit 1431 and the creation unit 1432 based on this specification data. Specifically, the controller 1433 controls what type of data the acquisition unit 1431 needs to acquire as judgment material data for learning, and what type of learning data the creation unit 1432 needs to create based on this judgment material data.

Herein, the specification data may also be generated by an external apparatus (not shown) based on an input made by a user or an administrator of the judgment artificial intelligence generation apparatus 1420, or may be set in advance. As an example of the latter, specification data may also be set in advance according to the characteristics of the object 1410, or the controller 1433 may automatically acquire specification data after the controller 1433 receives a learning start command.

The controller 1433 may also control the acquisition unit 1431 and the creation unit 1432 by classifying a required judgment capability into one of a plurality of types of capability, selecting a program that is appropriate for the type of classified judgment capability from a pre-prepared learning data creation program group, and executing the selected program, for example. Although required judgment capabilities are classified into three types in the description below according to the embodiments, the judgment capabilities may also be classified into two, four, or more types.

Although the three types will be described in detail in the following embodiments, the first type of judgment capability indicates the capability for judging whether or not the operation or the state of an object corresponds to a caution-required operation (an operation that requires caution) or a caution-required state (a state that requires caution) learned through second machine learning. The second type of judgment capability indicates the capability for judging whether data output from the AI is invalid output data or valid output data that is learned through second machine learning. The third type of judgment capability indicates the capability for judging whether or not data output from the AI is invalid output data generated from input data, which is learned through second machine learning, for which this AI is not suited.

Specifically, the judgment AI in which the learning result of second machine learning for procuring the first type of judgment capability is set can judge (decide) whether or not the operation or the state of a production apparatus that is expressed by observation data deviates from the allowable range defined for safety of this production apparatus, for example. In order to procure this judgment capability, the controller 1433 may control the creation unit 1432 such that learning data is created which includes observation data expressing the operation or the state of the production apparatus as judgment material data for learning and training data corresponding to whether this operation or state is deviated from the allowable range.

The learning data storage unit 1440 may be a memory and/or an auxiliary storage, for example. The learning data storage unit 1440 stores the learning data created by the creation unit 1432. Learning data is read out by the learning unit 1450 as needed when second machine learning is executed.

The learning unit 1450 may be a processor and a memory, for example. The learning unit 1450 reads out learning data from the learning data storage unit 1440. The learning unit 1450 performs second machine learning including causing the judgment AI 1460 to judge, based on judgment material data for learning, whether or not the output from the control AI 1400 that corresponds to this judgment material data included in the learning data is valid. Specifically, the learning unit 1450 gives the judgment material data for learning included in the learning data to the judgment AI 1460, and obtains output data (the result of judgment). The learning unit 1450 performs second machine learning (updates model parameters) for the judgment AI 1460 such that this output data approaches the training data included in the learning data. The learning unit 1450 then stores the ultimate model parameters obtained after execution of the second machine learning in the learning result storage unit 1470 as the learning result of the second machine learning.

The judgment AI 1460 may be implemented by a processor and a memory, for example. The judgment AI 1460 receives judgment material data for learning from the learning unit 1450, judges the validity of the output from the control AI 1400 based on this judgment material data, and returns the result of judgment to the learning unit 1450. The model parameters set in the judgment AI 1460 may be updated by the judgment AI 1460. The judgment AI 1460 corresponds to a third artificial intelligence according to an embodiment. The judgment AI 1460 may be a statistical model such as a neutral network, for example.

The learning result storage unit 1470 may be a memory and/or an auxiliary storage, for example. The learning result of second machine learning is written by the learning unit 1450 in the learning result storage unit 1470. In order to provide the judgment capability procured by the judgment AI 1341 shown in FIG. 1 or another AI through second machine learning, the learning result is read out as needed. An artificial intelligence in which this learning result is set corresponds to a fourth artificial intelligence according to an embodiment.

As described above, a control system according to an application example judges the validity of an output from a control AI based on judgment material data, which is data relating to the output from the control AI. The capability for making such a judgment is procured through machine learning based on learning data including judgment material data for learning selected based on the specification of this capability and training data indicating a correct value of the result of judgment of the validity of the output from the control AI that corresponds to this judgment material data, and its learning result is set in the judgment AI. Thus, according to this control system, it is possible to judge the validity of the output from the control AI. Also, if it is judged that the output from the control AI is not valid, this control system issues a warning, and/or intervenes in the control. This makes it possible to prevent an object from being controlled based on invalid data output from the control AI, or quickly detect and handle an adverse effect resulting from the invalid output data. That is, this control system can ensure high safety while controlling an object utilizing the control AI.

### §2 Configuration Example

A configuration example of the present embodiment relates to a second learning data creation apparatus configured to create learning data (referred to as "second learning data", for convenience) used in second machine learning for judging the validity of the output from a second artificial intelligence in which a learning result of first machine learning for a first artificial intelligence is set. Note that the first artificial intelligence may not have undergone machine learning at all, or may have undergone learning that is different from the first machine learning in advance. When the first artificial intelligence has undergone learning that is different from the first machine learning in advance, the first machine learning may be so-called reinforcement learning for the first artificial intelligence. Also, the second artificial intelligence is an artificial intelligence that has finished the first machine learning (that may or may not be additional learning depending on the case). Herein, the second artificial intelligence may be another artificial intelligence that is different from the first artificial intelligence in which the learning result of the first machine learning is set, or may be the first artificial intelligence that has completed the first machine learning. The second learning data creation apparatus according to the present embodiment may be referred to as a "judgment capability learning data creation apparatus".

The second learning data creation apparatus according to the present embodiment receives specification data that indicates the specification of a judgment capability required to be procured through the second machine learning, that is, the capability for judging the validity of the output from the second artificial intelligence. This second learning data creation apparatus creates second learning data based on this specification.

### Hardware Configuration

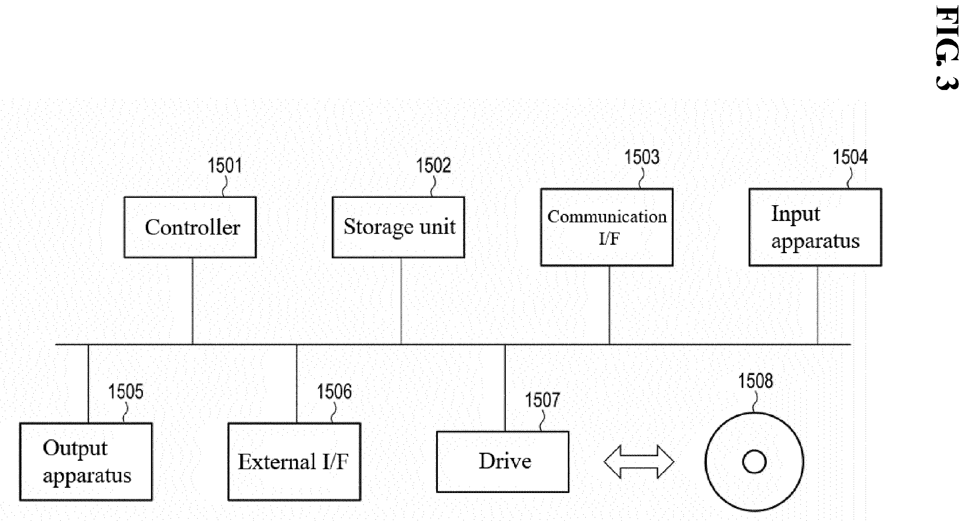

Next, one example of a hardware configuration of the second learning data creation apparatus according to the present embodiment will be described with reference to FIG. 3. FIG. 3 schematically shows one example of a hardware configuration of the second learning data creation apparatus according to the present embodiment.

As shown in FIG. 3, the second learning data creation apparatus according to the present embodiment may be a computer in which a controller 1501, a storage unit 1502, a communication interface 1503, an input apparatus 1504, an output apparatus 1505, an external interface 1506, and a drive 1507 are electrically connected to each other. Note that the communication interface and the external interface are respectively denoted as "communication I/F" and "external I/F" in FIG. 3.

The controller 1501 includes a CPU (and/or another processor), a RAM (Random Access Memory), and a ROM (Read Only Memory), for example. The CPU loads a program stored in the storage unit 1502 to the RAM. As a result of the CPU interpreting and executing this program, the controller 1501 can execute or control various types of information processing, for example, processing of constituent elements described as the elements of the functional configuration, for example.

The storage unit 1502 is a so-called auxiliary storage, and may be an internal or an external hard disk drive (HDD), a solid state drive (SSD), or a semiconductor memory such as a flash memory. The storage unit 1502 stores programs executed by the controller 1501 (for example, a program for causing the controller 1501 to execute learning data creation processing), and data used by the controller 1501, for example.

The communication interface 1503 may be a wireless communication module for a WLAN (Wireless Local Area Network), mobile communication (e.g., 4G), or BLE (Bluetooth (registered trademark) Low Energy), or an interface for performing wireless communication through a network. Also, the communication interface 1503 may further include a wired communication module such as a wired LAN module, in addition to a wireless communication module, or instead of a wireless communication module.

The input apparatus 1504 may also include apparatuses for receiving a user input, such as a touch screen, a keyboard, a mouse, and a microphone, for example. Also, the input apparatus 1504 may include a sensor configured to measure a predetermined physical quantity, generate and input sensing data, and a camera configured to capture an image and generate image data. The output apparatus 1505 is an apparatus for performing output, such as a display or a speaker, for example.

The external interface 1506 is a USB (Universal Serial Bus) port and a memory card slot, for example, and is an interface for connection to an external apparatus.

Note that a portion or all of the communication interface 1503, the input apparatus 1504, the output apparatus 1505, and/or the drive 1507 may also be external apparatuses separate from the second learning data creation apparatus.

The drive 1507 is a CD (Compact Disc) drive, a DVD (Digital Versatile Disc) drive, or a BD (Blu-ray (registered trademark) Disc) drive, for example. The drive 1507 reads a program and/or data stored in a storage medium 1508, and transmits the program and/or data to the controller 1501. Note that a portion or all of the programs and data sets described to be stored in the storage unit 1502 may also be read by the drive 1507 from the storage medium 1508.

The storage medium 1508 is a medium for accumulating programs and/or data sets through electrical, magnetic, optical, mechanical, or chemical action in a machine (including a computer) readable format. The storage medium 1508 is a detachable disk medium such as a CD, a DVD, or a BD, for example, but is not limited thereto, and may be a flash memory or another semiconductor memory.

Note that with regard to a specific hardware configuration of the second learning data creation apparatus, constituent elements can be omitted, substituted, and added as appropriate, depending on the embodiment. For example, the controller 1501 may also include a plurality of processors. The second learning data creation apparatus may be an information processing apparatus designed exclusively for information processing to be executed, or a general-purpose information processing apparatus such as a smartphone a tablet PC (Personal Computer), a laptop PC, or a desktop PC. Also, the second learning data creation apparatus may be constituted by a plurality of information processing apparatuses, for example. In the following explanations, various apparatuses other than the second learning data creation apparatus also have a hardware configuration that is the same as or similar to that of the second learning data creation apparatus.

### Functional Configuration

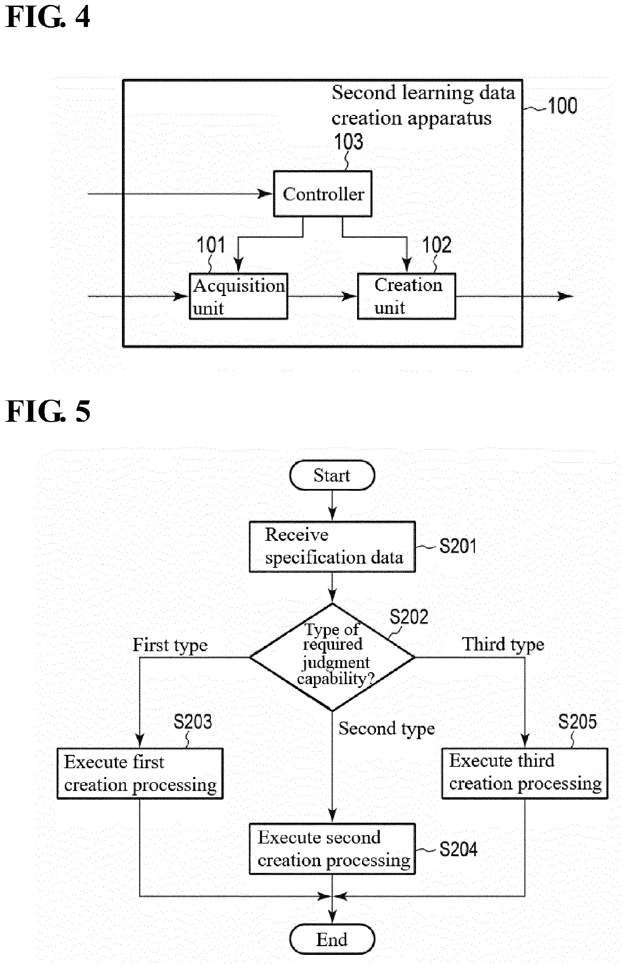

Next, one example of a functional configuration of the second learning data creation apparatus according to the present embodiment will be described with reference to FIG. 4. FIG. 4 schematically shows one example of the functional configuration of a second learning data creation apparatus 100.

As shown in FIG. 4, the second learning data creation apparatus 100 includes an acquisition unit 101, a creation unit 102, and a controller 103.

The acquisition unit 101 may be an input apparatus, a communication interface, or an external interface, for example. The acquisition unit 101 acquires, as judgment material data for learning, data designated by the controller 103 based on the specification of a required judgment capability, from data relating to the output from a first artificial intelligence and data relating to the output from a second artificial intelligence. The acquisition unit 101 transfers the judgment material data for learning to the creation unit 102.

Herein, the data relating to the output may include the data output from the first artificial intelligence and/or the data output from the second artificial intelligence, observation data expressing the result of an observation of an operation or a state of an object controlled based on this output data, and input data that is the source of this output data.

Herein, the object is not limited to a directly controlled object, and may also include an indirectly controlled object that is affected by the operation or the state of the directly controlled object. For example, the object may include a pick-and-place apparatus (or a robot hand) and a work piece that is held by this pick-and-place apparatus (or robot hand). Also, the operation or the state may include at least one of the operation and the state or both the operation and the state. The operation and the state may not be clearly distinguished from each other.

The object controlled by the second artificial intelligence may be any of various apparatuses that can be controlled, such as industrial robots, surgical robots, entertainment robots, and other robots, chemical plants, engines for automobiles and other machines, treatment equipment such as nebulizers, and building air conditioning systems. Also, the object controlled by the first artificial intelligence may be an actual device that is the same as or a similar to the object controlled by the second artificial intelligence, or may be a simulation model of this object.

The observation data may be obtained based on observation of the locus of movement of the pick-and-place apparatus, movement of a motor, a state of combustion or other chemical reactions (for example, the temperature, the humidity, or the like of the object or its periphery), and energy consumption, for example.

Various sensors such as an image sensor (camera), a microphone, a rotation speed sensor, an acceleration sensor, an angular velocity sensor, a temperature sensor, a humidity sensor, a vibration sensor, a noise sensor, an operation time sensor, and an energy consumption sensor can be used in observation of the operation or the state of an object. The acquisition unit 101 may directly acquire observation data from an observation apparatus such as such a sensor as the judgment material data for learning, or may acquire observation data stored by this observation apparatus in a storage (not shown) as the judgment material data for learning.

The creation unit 102 may be a processor and a memory, for example. The creation unit 102 receives judgment material data for learning from the acquisition unit 101, and creates second learning data for procuring the capability for judging the validity of the output from the second artificial intelligence based on the judgment material data for learning. The second learning data includes the judgment material data for learning corresponding to input data for learning (for example, values given to the input nodes of a neutral network serving as an artificial intelligence (referred to as a "third artificial intelligence" hereinafter) on which second machine learning is executed, or values given to the input nodes of another statistical model, and training data that indicates a correct value of the result of judgment of the validity of the output from the first artificial intelligence and/or the validity of the output from the second artificial intelligence based on the judgment material data for learning. Which value the creation unit 102 sets as training data may be controlled by the controller 103.

In order to organize terms in the description below, basically, "input data" indicates input data given to the first artificial intelligence or the second artificial intelligence that relates to first machine learning. On the other hand, input data that is given to an artificial intelligence that relates to second machine learning (third artificial intelligence or fourth artificial intelligence, which will be described later) is referred to as "judgment material data".

The controller 103 may be a processor and a memory, for example. The controller 103 receives specification data indicating the specification of a judgment capability required for the third artificial intelligence, and controls the acquisition unit 101 and the creation unit 102 based on this specification data. Specifically, the controller 103 controls what type of data the acquisition unit 101 needs to acquire as the judgment material data for learning and what type of second learning data the creation unit 102 needs to create based on this judgment material data.

Herein, the specification data may also be generated by an external apparatus (not shown) based on an input made by a user or an administrator of the second learning data creation apparatus 100, or may be set in advance. As the latter example, the specification data may be pre-set according to characteristics of an object controlled based on the data output from the first artificial intelligence and/or the data output from the second artificial intelligence, or may automatically acquire the specification data after the controller 103 receives a learning start command.

For example, the controller 103 may also control the acquisition unit 101 and the creation unit 102 by classifying a required judgment capability into one of a plurality of types of capability, selecting a program that is appropriate for the type of classified judgment capability from a pre-prepared learning data creation program group, and executing the selected program.

The first type of judgment capability indicates the capability for judging the validity of the output from a second artificial intelligence based on the operation or the state of the object controlled by an artificial intelligence (corresponding to a second artificial intelligence because this artificial intelligence has completed first machine learning) for which the validity of the output is judged, more specifically, the capability for judging whether or not the operation or the state of the object controlled by the artificial intelligence corresponds to a caution-required operation or a caution-required state learned through the second machine learning.

The first machine learning for procuring the capability for controlling the operation (behavior) or the state of the object may be reinforcement learning, for example. During execution of learning (in particular, during the initial stage), randomly determined control values are given to the object, and performs various operations, which occasionally include a dangerous operation (for example, the pick-and-place apparatus moves close to the limit of its movable range) or falls into various states including a dangerous state.

The first artificial intelligence learns to avoid such an operation or state that will cause an undesired result (low reward) and to be oriented to such an operation or state that will cause a desired result (high reward). For example, if the object is a pick-and-place apparatus, the first artificial intelligence learns through trial and error how to control the object in order to cause this object to perform a series of operations of holding a work piece, lifting the work piece, moving the work piece to a predetermined position, and installing the work piece.

Thus, if the operation or the state of an object for learning in a time period during which first machine learning is executed (in particular, during the initial stage) is observed, it is possible to grasp a caution-required operation or a caution-required state of the object that will cause an undesired result.

The operation or the state that is to be observed may be determined by whether or not it can be used to judge whether or not there is a risk that an undesired result will be brought about. For example, when it is judged whether or not there is a risk that an object will operate in a range exceeding a predetermined withstand temperature, withstand electric current, or withstand voltage, it is sufficient to observe the temperature of the object or its periphery, the electric current applied to the object, the voltage applied to the object, or the like.

Note that the operation or the state that is to be observed may be designated by a human being (a designer or operator of a judgment apparatus that utilizes a learning result of the second machine learning) in advance through a learning request, or may be predefined as a portion of specification data. In this case, it is possible to omit the time and effort of observing unnecessary data. Alternatively, a configuration may be adopted in which a wide variety of operations or states are observed as much as possible in a time period during which the first machine learning is executed, and an operation or a state that is used by a human being or software (including artificial intelligence) so as to define a caution-required operation and a caution-required state is designated later. In this case, it is possible to reduce reception of a caution-required operation and a caution-required state.

The second type of judgment capability indicates the capability for judging the validity of the output from the second artificial intelligence based on the data directly output from an artificial intelligence that controls the operation or the state of the object, more specifically, the capability for judging whether this output data is invalid output data or valid output data that is learned through the second machine learning. As described above, the first machine learning for procuring the capability (control capability) of controlling the operation or the state of this object may be reinforcement learning. Also, the data output from the first artificial intelligence during execution of the first machine learning (in particular, during the initial stage) is determined randomly, and thus there is a high possibility that this output data is not valid.

Therefore, the invalid output data can be learned using output data seen during the first machine learning (output data obtained during learning), for example. Also, the valid output data can be learned using the output data seen after completion of the first machine learning (output data obtained after completion of learning). Furthermore, the data output from the artificial intelligence may be unknown output data that is different from the output data obtained during learning and the output data obtained after completion of learning. In such a case, the data output from the artificial intelligence may be inappropriate to be classified into the output data obtained during learning or the output data obtained after completion of learning. This output data is handled in any manner, and for example, may be judged as having unknown validity or as being not valid due to being unable to guarantee the validity.

The third type of judgment capability indicates the capability for judging the validity of the output from an artificial intelligence based on input data that is the source of the data output from the artificial intelligence, more specifically, the capability for judging whether or not this output data is invalid output data generated from input data, which is learned through the second machine learning, for which the artificial intelligence is not suited. The input data for which the artificial intelligence is not suited indicates input data with which the artificial intelligence will generate incorrect output data with a high possibility. That is, there is a high possibility that the output data generated by the artificial intelligence for this input data will be not valid.

The input data for which the artificial intelligence is not suited (that is, the judgment material data for learning in the second machine learning) can be collected by causing the second artificial intelligence to generate the output data by providing the second artificial intelligence with input data with a known correct label, and extracting the input data that is the source of the output data that does not coincide with the correct label.

Note that the artificial intelligence will generate correct output data for the input data used in the first machine learning. Therefore, this input data may be excluded from the input data that is given to the second artificial intelligence, in order to collect the input data for which the artificial intelligence is not suited.

### Other Considerations

Functions of the second learning data creation apparatus 100 will be described in detail in the operation examples described below. Note that an example in which the functions of the second learning data creation apparatus 100 are realized by a general-purpose CPU will be described in the present embodiment. However, some or all of the above-described functions may also be realized by one or more dedicated processors. Also, with regard to the functional configuration of the second learning data creation apparatus 100, functions may be omitted, substituted, or added as appropriate depending on the embodiment.

### §3 Operation Examples

Next, operation examples of the second learning data creation apparatus 100 and peripheral apparatuses configured to operate when this second learning data creation apparatus 100 creates second learning data will be described with reference to FIGS. 5 to 12, 14, and 15. Note that the processing procedure that will be described below is an example, and each process may be changed to the extent possible. Also, with regard to the processing procedure that will be described below, steps may be omitted, substituted, and added as appropriate, depending on the embodiment.

FIG. 5 is a flowchart illustrating exemplary operations of the second learning data creation apparatus 100. The controller 103 receives specification data (step S201), and judges whether a judgment capability required by this specification data is of the first type, the second type, or the third type (step S202).

If the required judgment capability is of the first type of capability, the controller 103 causes the acquisition unit 101 and the creation unit 102 to execute first creation processing (step S203). If the required judgment capability is of the second type of capability, the controller 103 causes the acquisition unit 101 and the creation unit 102 to execute second creation processing (step S204). If the required judgment capability is of the third type of capability, the controller 103 causes the acquisition unit 101 and the creation unit 102 to execute third creation processing.

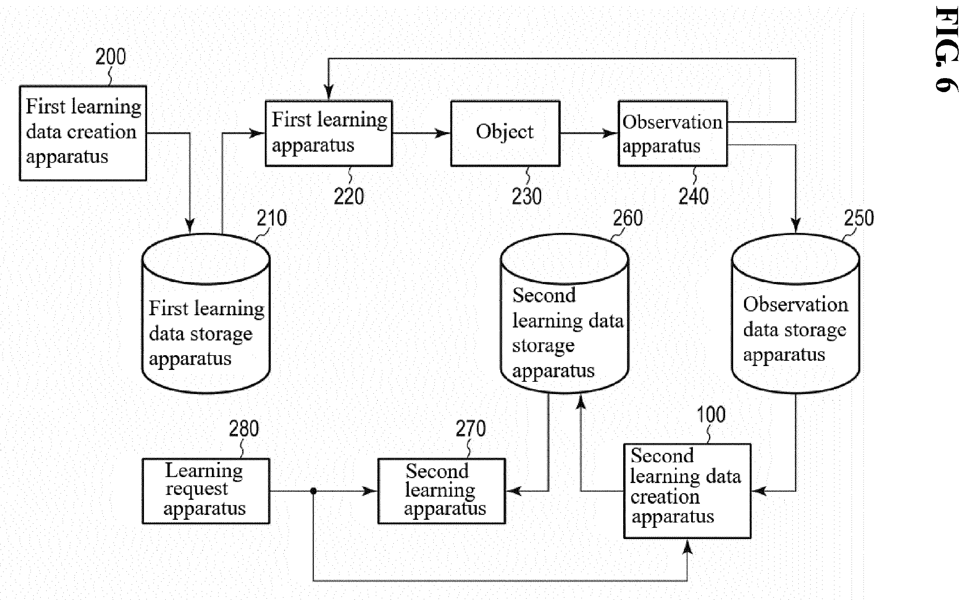

The first creation processing can be applied to a machine learning system illustrated in FIG. 6. The machine learning system in FIG. 6 includes the second learning data creation apparatus 100, a first learning data creation apparatus 200, a first learning data storage apparatus 210, a first learning apparatus 220, an object 230, an observation apparatus 240, an observation data storage apparatus 250, a second learning data storage apparatus 260, a second learning apparatus 270, and a learning request apparatus 280.

The first learning data creation apparatus 200 creates first learning data corresponding to the input data given to the first artificial intelligence, and stores the created data in the first learning data storage apparatus 210. The input data expresses information that will be referenced for controlling the operation or the state of the object 230, such as an image or a temperature, for example.

The first learning data storage apparatus 210 stores the first learning data. The first learning data is created by the first learning data creation apparatus 200, and read out by the first learning apparatus 220 as needed. Note that the first learning data storage apparatus 210 may further store test data for evaluating a first learning achievement.

The first learning apparatus 220 performs the first machine learning including causing the first artificial intelligence to control the operation or the state of the object 230 (for learning). Specifically, the first learning apparatus 220 reads out the first learning data from the first learning data storage apparatus 210, provides the first artificial intelligence with this first learning data as the input data, and obtains the output data (a control value given to the object 230). The output data may be a control value given to an actuator such as a hydraulic cylinder, a motor, or a solenoid, a command for ejecting fuel to an engine serving as the object 230, or a command for increasing or reducing the rotation speed of a crankshaft, for example. The first artificial intelligence procures a high reward when the object 230 controlled by this output data brings about desired results, and procures a low reward when the object brings about undesired results. The results brought about by the object 230 can be evaluated based on the observation performed by the observation apparatus 240, for example. The desired results are selected based on a capability that is desirably procured through the first machine learning, and may be improvement in fuel consumption, reduction in environmental impact, and reduction in energy consumption, for example. This information may be determined based on the specification data, for example. The first learning apparatus 220 performs machine learning (update of model parameters) for the first artificial intelligence so as to maximize this reward.

The first learning apparatus 220 evaluates the learning achievement of the first artificial intelligence using test data, and when the learning achievement reaches a learning target, the first learning apparatus 220 sets the learning result (model parameters) in the second artificial intelligence. Here, the first artificial intelligence and the second artificial intelligence, and a third artificial intelligence and a fourth artificial intelligence, which will be described later, may be (deep) neutral networks or other statistical models, for example. The model parameters obtained through the first machine learning (for example, deep learning) are set in the second artificial intelligence.

Note that the first learning apparatus 220 and the second artificial intelligence may be incorporated into the same apparatus (for example, a control apparatus that controls the operation or the state of an engine serving as the object, such as an ECU (Engine Control Unit)).

The object 230 receives a control value from the first artificial intelligence and responds to this control value. For example, the object 230 ejects fuel, changes the rotation speed of a crankshaft, or changes a set temperature of air conditioning. The operation or the state of the object 230 is observed by the observation apparatus 240.

The observation apparatus 240 can include various sensors such as an image sensor (camera), a microphone, a rotation speed sensor, an acceleration sensor, an angular velocity sensor, a temperature sensor, a humidity sensor, a vibration sensor, a noise sensor, an operation time sensor, and an energy consumption sensor, for example. The observation apparatus 240 observes the operation or the state of the object 230 and generates observation data. The observation apparatus 240 stores the observation data in the observation data storage apparatus 250.

Specifically, the observation apparatus 240 observes the operation or the state of the object 230 in a time period during which machine learning is executed by the first learning apparatus 220, and generates first observation data. The observation apparatus 240 stores the first observation data in the observation data storage apparatus 250. The first observation data may express the result of the observation of the operation or the state of the object 230 in a time period during which the learning achievement of the first artificial intelligence is not more than a threshold value, out of the entire time period during which machine learning is executed by the first learning apparatus 220. In general, the higher the learning achievement of the artificial intelligence is (as the machine learning is close to the completion), the lower the possibility that undesired results arise. Therefore, even though the first observation data is collected only in early stages of the machine learning, it may be possible to accurately learn caution-required operations and caution-required states.

Also, among the early stages, in an initial stage in which the learning achievement is extremely low, there is a risk that the object 230 will perform operation or fall into a state that is impossible at the time of operation, and even if such an operation or state is disregarded, it may be possible to accurately learn caution-required operations and caution-required states. That is, the first observation data may express the result of the observation of the operation or the state of the object 230 in a time period during which the learning achievement of the first artificial intelligence is at least a first threshold value and not more than a second threshold value, out of the entire time period during which machine learning is executed by the first learning apparatus 220.

The observation apparatus 250 stores the first observation data. The first observation data is generated by the observation apparatus 240, and read out by the second learning data creation apparatus 100 as needed.

The second learning data creation apparatus 100 receives the learning request including the specification data from the learning request apparatus 280, acquires necessary data based on this learning request, and creates second learning data, for example. Then, the second learning data creation apparatus 100 stores the second learning data in the second learning data storage apparatus 260.

In the example of FIG. 6, the second learning data creation apparatus 100 reads out the first observation data from the observation data storage apparatus 250, and creates the second learning data based on this first observation data (first creation processing).

The second learning data may be a combination of the first observation data (judgment material data for learning) and a value (training data) indicating that the operation or the state expressed by this judgment material data corresponds to a caution-required operation or a caution-required state (that is, the output from the artificial intelligence is not valid), for example.

Alternatively, the second learning data creation apparatus 100 may provide the second artificial intelligence with any type of input data to generate output data. Then, the second learning data creation apparatus 100 may create more sophisticated second learning data based on the second observation data expressing the result of the observation of the operation or the state of the object (the object 230 or an actual device that is the same type as this, or a simulation model) controlled by this output data.

Specifically, the second learning data may be a combination of the third observation data (judgment material data for learning) that is a part or all of the first observation data and a value (training data) indicating that the operation or the state expressed by this third observation data corresponds to a caution-required operation or a caution-required state. Here, "third observation data" means data that does not coincide with the second observation data in the first observation data. In general, because the operation or the state expressed by this second observation data is the operation or the state of the object controlled based on the data output from the second artificial intelligence, operations or states can be inferred to be an appropriate operation or state with a high probability, and thus those operations or states may be excluded from the judgment material data for learning.

Furthermore, the second learning data as described below may be created based on the second observation data. This second learning data is a combination of the second observation data (judgment material data for learning) and a value (training data) indicating that the operation or the state expressed by this second observation data does not correspond to a caution-required operation or a caution-required state (that is, the output from the artificial intelligence is valid).

The second learning data storage apparatus 260 stores the second learning data. The second learning data is created by the second learning data creation apparatus 100, and read out by the second learning apparatus 270 as needed. Note that the second learning data storage apparatus 260 may further store test data for evaluating a second learning achievement.

The second learning apparatus 270 uses the second learning data to perform second machine learning including causing the third artificial intelligence to judge, based on the judgment material data for learning, whether or not the output from the artificial intelligence that has brought about this judgment material data is valid. Specifically, the second learning apparatus 270 provides the third artificial intelligence with the judgment material data for learning included in the learning data, and obtains the output data (the result of judgment). The second learning apparatus 270 performs second machine learning (update of model parameters) for the third artificial intelligence such that this output data approaches the training data included in the learning data.

The second learning apparatus 270 evaluates the learning achievement for the third artificial intelligence for learning using test data, and when the learning achievement reaches a learning target, the second learning apparatus 270 sets the learning result (model parameters) in the fourth artificial intelligence. That is, the fourth artificial intelligence is an artificial intelligence that has learned the second machine learning, and may be an artificial intelligence in which the learning result of the second machine learning is set and that is different from the third artificial intelligence, or may be a third artificial intelligence that has completed the second machine learning. The fourth artificial intelligence is utilized by a judgment apparatus configured to judge whether or not the output from the second artificial intelligence is valid. Note that the second learning apparatus 270 may be incorporated into the judgment apparatus.

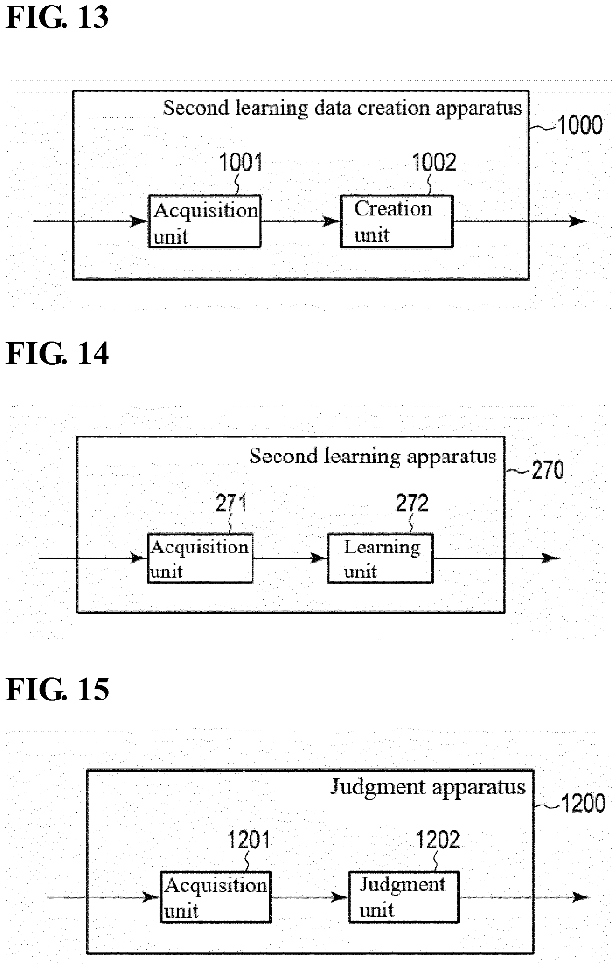

As shown in FIG. 14, the second learning apparatus 270 may include an acquisition unit 271 and a learning unit 272. The hardware configuration of the second learning apparatus 270 may be the same as or similar to the hardware configuration of the second learning data creation apparatus described with reference to FIG. 3.

The acquisition unit 271 may be an input apparatus, a communication interface, or an external interface, for example. The acquisition unit 271 reads out the second learning data stored in the second learning data storage apparatus 260. The acquisition unit 271 transfers the second learning data to the learning unit 272.

The learning unit 272 may be a processor and a memory, for example. The learning unit 272 receives the second learning data from the acquisition unit 271, and performs second machine learning for the third artificial intelligence using this second learning data.

A judgment apparatus configured to judge whether or not the output from the second artificial intelligence is valid may be a judgment apparatus 1200 shown in FIG. 15. This judgment apparatus 1200 includes an acquisition unit 1201 and a judgment unit 1202. The hardware configuration of the judgment apparatus 1200 may be the same as or similar to the hardware configuration of the second learning data creation apparatus described with reference to FIG. 3.

The acquisition unit 1201 may be an input apparatus, a communication interface, or an external interface, for example. After the completion of the second machine learning, that is, after the fourth artificial intelligence is provided with the required judgment capability, the acquisition unit 1201 acquires data relating to the output from an artificial intelligence as judgment material data. The acquisition unit 1201 transfers the judgment material data to the judgment unit 1202.

The judgment unit 1202 may be a processor and a memory, for example. The judgment unit 1202 includes a fourth artificial intelligence. The judgment unit 1202 receives judgment material data from the acquisition unit 1201 and directly gives the judgment material data to the fourth artificial intelligence, or performs processing such as conversion and then gives the resulting data to the fourth artificial intelligence. The judgment unit 1202 then receives output data corresponding to the input data (judgment material data) from the fourth artificial intelligence. The judgment unit 1202 directly obtains the data output from the fourth artificial intelligence, or obtains data resulting from performing processing such as conversion on the output data, as the result of judgment of the validity of the output from an artificial intelligence.

If the data relating to the output from the artificial intelligence is not valid, the judgment apparatus 1200 may issue a warning or intervene in the control of the operation or the state of the object 230. Specifically, the judgment apparatus 1200 may also include the warning unit 1350 and/or the intervention unit 1360 described with reference to FIG. 1, in addition to the acquisition unit 1201 and the judgment unit 1202.

The learning request apparatus 280 receives a learning request from a user terminal (not shown in FIG. 6) and transfers the learning request to the second learning data creation apparatus 100 and the second learning apparatus 270, for example. For example, the learning request includes a learning start command for starting the second machine learning and specification data for defining a judgment capability that is desirably procured through the second machine learning. Also, the learning request may include a learning start command for starting the first machine learning and specification data for defining a capability that is desirably procured through the first machine learning.

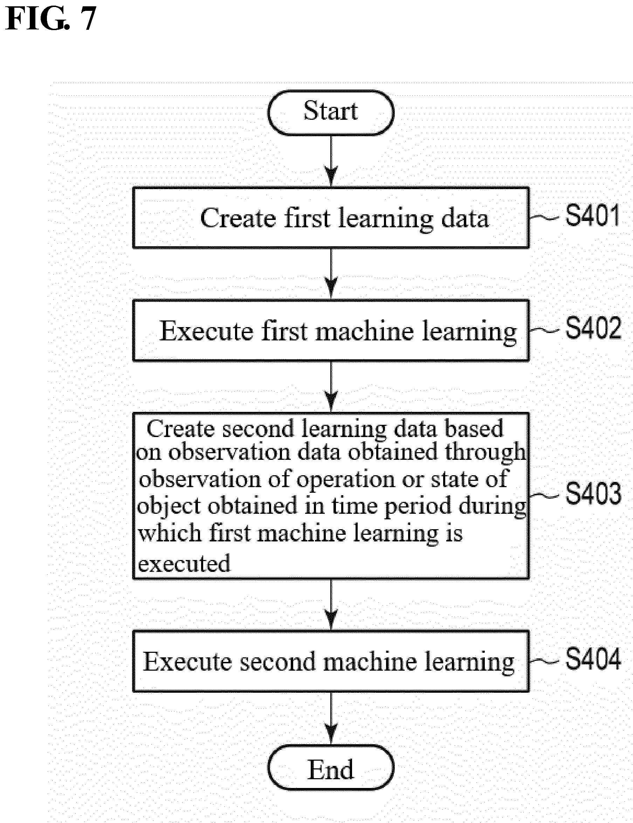

The machine learning system illustrated in FIG. 6 operates as illustrated in FIG. 7. The first learning data creation apparatus 200 creates first learning data corresponding to the input data given to the first artificial intelligence (step S401). The first learning apparatus 220 uses the first learning data created in step S401 to perform the first machine learning including causing the first artificial intelligence to control the operation or the state of the object 230 (step S402).

The second learning data creation apparatus 100 acquires the first observation data obtained during execution of step S402 and creates second learning data based on this first observation data (step S403). Note that the second learning data creation apparatus 100 may also provide the second artificial intelligence in which the learning result of the first machine learning is set after step S402 with any type of input data, and cause the second artificial intelligence to generate output data. The second learning data creation apparatus 100 may also acquire the second observation data expressing the result of the observation of the operation or the state of the object controlled by this output data, and create second learning data based on this second observation data.

The second learning apparatus 270 uses the second learning data created in step S403 to perform second machine learning including causing the third artificial intelligence to judge whether or not the judgment material data for learning expresses a caution-required operation or a caution-required state (step S404).

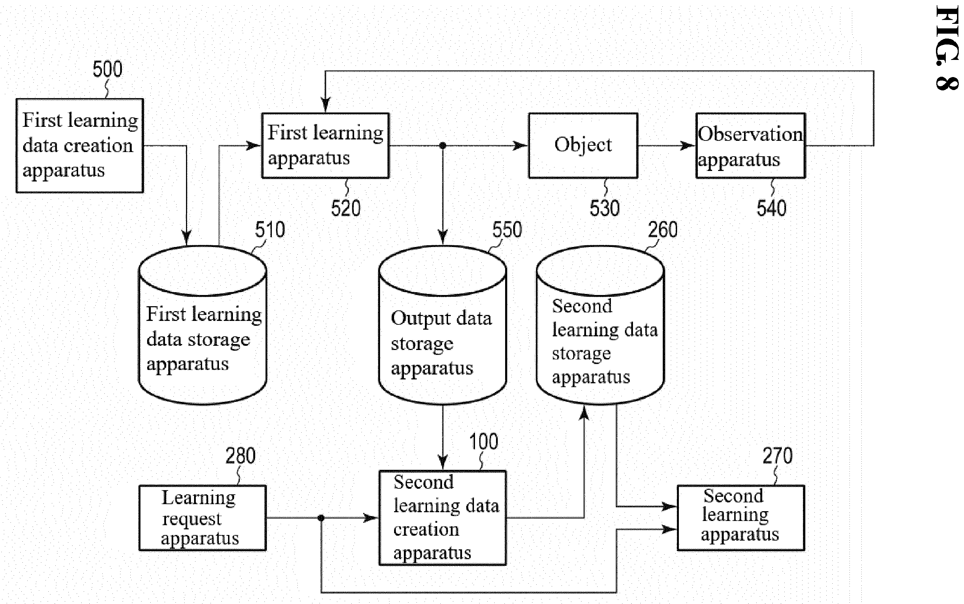

The second creation processing can be applied to a machine learning system illustrated in FIG. 8. The machine learning system shown in FIG. 8 includes the second learning data creation apparatus 100, a first learning data creation apparatus 500, a first learning data storage apparatus 510, a first learning apparatus 520, an object 530, an observation apparatus 540, an output storage apparatus 550, a second learning data storage apparatus 260, a second learning apparatus 270, and a learning request apparatus 280.

Note that the first learning data creation apparatus 500, the first learning data storage apparatus 510, the first learning apparatus 520, the object 530, and the observation apparatus 540 may be the same as or similar to the first learning data creation apparatus 200, the first learning data storage apparatus 210, the first learning apparatus 220, the object 230, and the observation apparatus 240 shown in FIG. 6.

The output data storage apparatus 550 stores the data output from the first artificial intelligence in a time period during which the first machine learning is executed. The data output from the first artificial intelligence is read out by the second learning data creation apparatus 100 as needed.

The second learning data creation apparatus 100 receives the learning request including specification data from the learning request apparatus 280, acquires necessary data based on this learning request, and creates second learning data, for example. Then, the second learning data creation apparatus 100 stores the second learning data in the second learning data storage apparatus 260.

In the example of FIG. 8, the second learning data creation apparatus 100 reads out, from the output data storage apparatus 550, the data output from the first artificial intelligence in a time period during which the first machine learning is executed, and creates the second learning data based on this output data (second creation processing).

The second learning data may be a combination of the data output from the first artificial intelligence (judgment material data for learning) in a time period during which the first machine learning is executed and a value (training data) indicating that this output data is output data obtained during learning (that is, the output from an artificial intelligence is not valid), for example.

Also, the second learning data creation apparatus 100 may provide the second artificial intelligence with any type of input data, and cause the second artificial intelligence to generate the output data. Then, the second learning data creation apparatus 100 may acquire the data output from the second artificial intelligence, and create the second learning data based on this output data.

Specifically, the second learning data may be a combination of the data output from the second artificial intelligence (judgment material data for learning) and a value (training data) indicating that this output data corresponds to output data obtained after completion of learning (that is, the output from an artificial intelligence is valid).

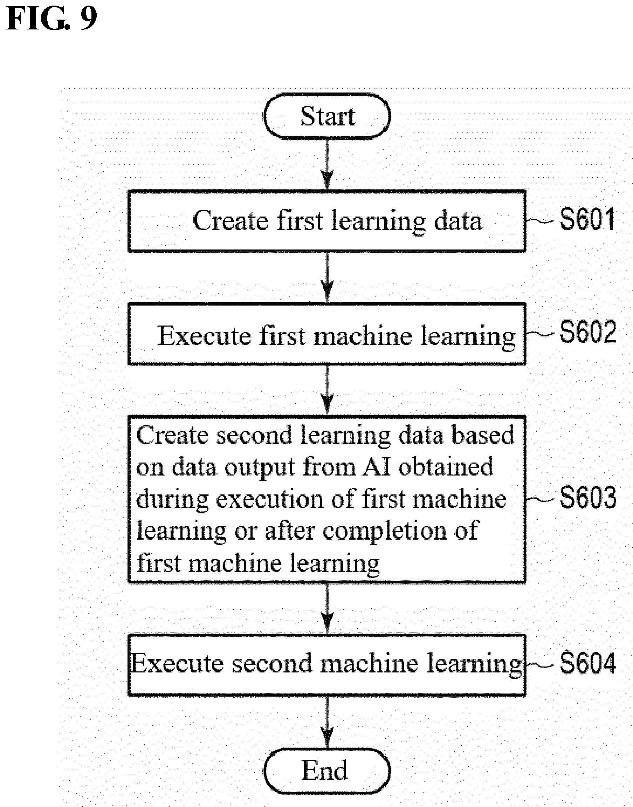

The machine learning system shown in FIG. 8 operates as illustrated in FIG. 9.

The first learning data creation apparatus 500 creates first learning data corresponding to the input data given to the first artificial intelligence (step S601). The first learning apparatus 520 uses the first learning data created in step S601 to perform the first machine learning including causing the first artificial intelligence to control the operation or the state of the object 530 (step S602).

The second learning data creation apparatus 100 acquires the data output from the first artificial intelligence obtained during execution of step S602 and creates second learning data based on this output data (Step S603). Note that the second learning data creation apparatus 100 may also provide, with any type of input data, the second artificial intelligence in which the learning result of the first machine learning is set after completion of step S602, and cause the second artificial intelligence to generate output data. The second learning data creation apparatus 100 may also acquire this output data as the judgment material data for leaning and create the second learning data based on this output data.

The second learning apparatus 270 uses the second learning data created in step S603 to perform second machine learning including causing the third artificial intelligence to judge whether or not the judgment material data for learning expresses the output data obtained during learning or the output data obtained after completion of learning (step S604).

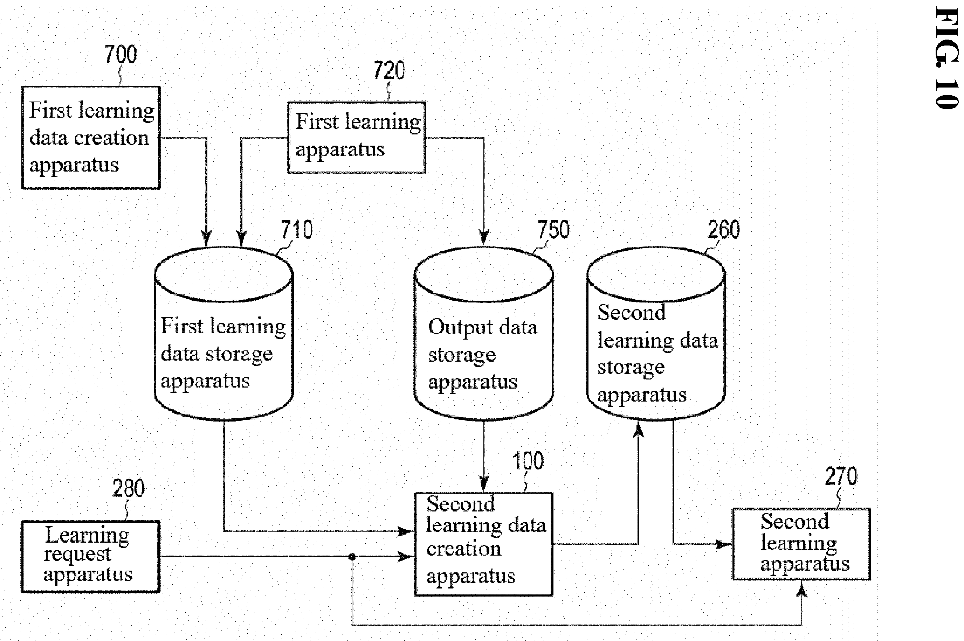

The third creation processing can be applied to a machine learning system illustrated in FIG. 10. The machine learning system shown in FIG. 10 includes the second learning data creation apparatus 100, a first learning data creation apparatus 700, a first learning data storage apparatus 710, a first learning apparatus 720, an output data storage apparatus 750, a second learning data storage apparatus 260, a second learning apparatus 270, and a learning request apparatus 280.

The first learning data creation apparatus 700 creates input data given to the first artificial intelligence and first learning data corresponding to the training data therefor, and stores the created data in the first learning data storage apparatus 710. The input data expresses an image, an audio, a text, a moving image, or a physical amount measured by a sensor, for example. The training data indicates correct output data that the first artificial intelligence needs to generate for the input data. Specifically, if the purpose of the first machine learning is the procurement of the capability for recognizing handwritten characters, the first learning data creation apparatus 700 creates learning data including the image data expressing the handwritten characters as the input data and the training data indicating characters corresponding to this image data.

The first learning data storage apparatus 710 stores the first learning data. The first learning data is created by the first learning data creation apparatus 700, and read out by the first learning apparatus 720 as needed. Note that the first learning data storage apparatus 710 may further store test data for evaluating a first learning achievement.

The first learning apparatus 720 reads out the first learning data from the first learning data storage apparatus 710, provides the first artificial intelligence with the input data included therein, and obtains the output data. The output data changes depending the purposes of the first machine learning, and may express the results of the recognition of the input data (for example, the results of character recognition, audio recognition, image recognition, moving image recognition, or the like). The first learning apparatus 720 performs machine learning (update of model parameters) for the first artificial intelligence such that this output data approaches the training data.

The first learning apparatus 720 evaluates the learning achievement of the first artificial intelligence using test data, and when the learning achievement reaches a learning target, the first learning apparatus 720 sets the learning result (model parameters) in the second artificial intelligence. Note that the first learning apparatus 720 and the second artificial intelligence may be incorporated into the same apparatus (for example, a server).

The output data storage apparatus 750 may also store the data output from the second artificial intelligence. The data output from the second artificial intelligence is read out by the second learning data creation apparatus 100 as needed.

The second learning data creation apparatus 100 receives the learning request including the specification data from the learning request apparatus 280, acquires necessary data based on this learning request, and creates second learning data. Then, the second learning data creation apparatus 100 stores the second learning data in the second learning data storage apparatus 260.

In the example of FIG. 10, the second learning data creation apparatus 100 reads out, from the output data storage apparatus 750, the data output from the second artificial intelligence, and creates the second learning data based on this output data (third creation processing).

Specifically, the second learning data creation apparatus 100 may also provide the second artificial intelligence with any input data (training data thereof is known), and cause the second artificial intelligence to generate the output data. Then, the second learning data creation apparatus 100 may also acquire the data output from the second artificial intelligence via the output data storage apparatus 750, and create the second learning data based on this output data.

Then, the second learning data creation apparatus 100 creates judgment material data for learning included in the second learning data, based on the input data that has causes the second artificial intelligence to generate incorrect output data. In this case, the second learning data creation apparatus 100 creates training data indicating that this judgment material data for learning corresponds to input data for which the second artificial intelligence is not suited (that is, indicating that the output data generated by the second artificial intelligence for this input data is not valid).

Also, the second learning data creation apparatus 100 may create judgment material data for learning included in the second learning data based on the input data that has causes the second artificial intelligence to generate correct output data. In this case, the second learning data creation apparatus 100 creates training data indicating that this judgment material data for learning does not correspond to input data for which the second artificial intelligence is not suited (that is, indicating that the output data generated by the second artificial intelligence for this input data is valid).

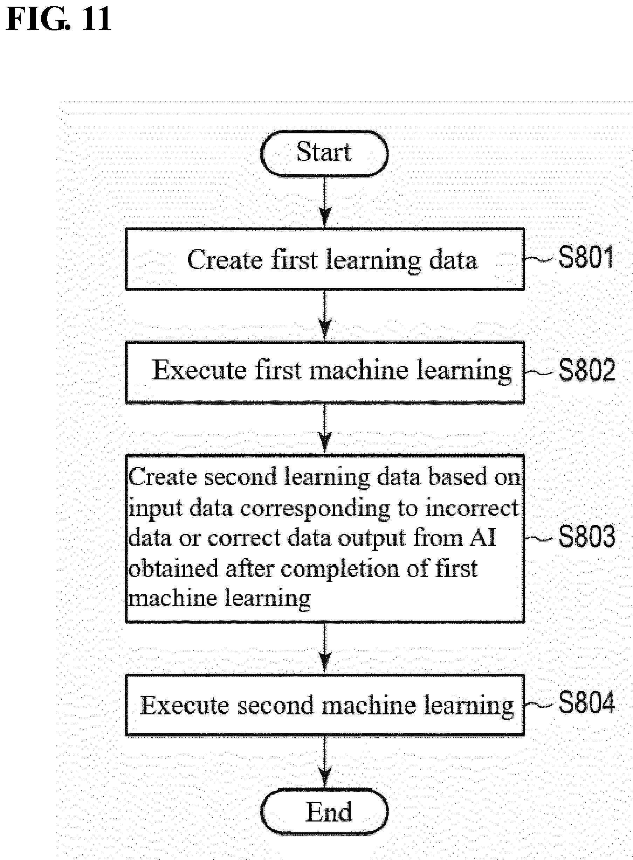

The machine learning system shown in FIG. 10 operates as illustrated in FIG. 11. The first learning data creation apparatus 700 creates first learning data corresponding to the input data given to the first artificial intelligence (step S801). The first learning apparatus 720 uses the first learning data created in step S801 to perform first machine learning for the first artificial intelligence (step S802).

The second learning data creation apparatus 100 provides the second artificial intelligence in which the learning result of the first machine learning is set after completion of step S802 with any type of input data (training data thereof is known), and causes the second artificial intelligence to generate output data. The second learning data creation apparatus 100 acquires this input data that is the source of this output data as the judgment material data for learning and creates the second learning data based on this input data. Specifically, the second learning data creation apparatus 100 creates the second learning data based on the input data (judgment material data for learning) corresponding to incorrect output data. Also, the second learning data creation apparatus 100 may create second learning data based on the input data (judgment material data for learning) corresponding to the correct output data.

The second learning apparatus 270 uses the second learning data created in step S803 to perform second machine learning including causing the third artificial intelligence to judge whether or not the judgment material data for learning expresses data for which the second artificial intelligence is not suited or suited (step S804).

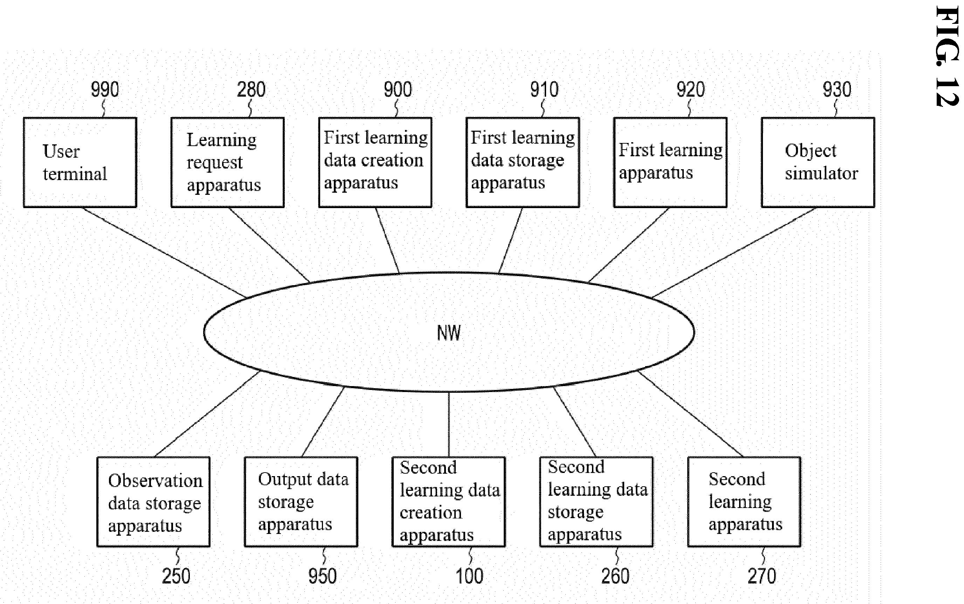

FIG. 12 shows a service provision system that provides a machine learning service for procuring the capability for judging the validity of the output from an artificial intelligence in response to a request from a user.

The service provision system shown in FIG. 12 includes the second learning data creation apparatus 100, a first learning data creation apparatus 900, a first learning data storage apparatus 910, a first learning apparatus 920, an object simulator 930, an observation data storage apparatus 250, an output data storage apparatus 950, a second learning data storage apparatus 260, a second learning apparatus 270, a learning request apparatus 280, and a user terminal 990. These apparatuses are connected to each other via a network NW.

Note that the apparatus configuration of the service provision system shown in FIG. 12 is merely an example. That is, some or all of the apparatuses shown in FIG. 12 may be integrated into one apparatus, or functions of the apparatuses shown in FIG. 12 may be distributed to a plurality of apparatuses. Also, some apparatuses of the service provision system shown in FIG. 12 may be removed or modified, and apparatuses (not shown in FIG. 12) may be added thereto.

The first learning data creation apparatus 900 may be the same as or similar to the above-described first learning data creation apparatus 200, first learning data creation apparatus 500, or first learning data creation apparatus 700. Note that the input data from the learning request apparatus 280 may include data that serves as the base for creating the first learning data.

The first learning data storage apparatus 910 may be the same as or similar to the above-described first learning data storage apparatus 210, first learning data storage apparatus 510 or first learning data storage apparatus 710.

The first learning apparatus 920 may be the same as or similar to the above-described first learning apparatus 220, first learning apparatus 520, or first learning apparatus 720. Note that the first learning apparatus 920 may receive a learning start command from the learning request apparatus 280, perform first machine learning in accordance with this command, or a different event may be the trigger for the first learning apparatus 920 performing first machine learning. Furthermore, the first learning apparatus 920 may receive specification data in which a capability that is desirably procured through first machine learning is determined (defined), for example. The first learning apparatus 920 may set the learning target for the first artificial intelligence or set a reward in the reinforcement learning based on the specification data.

The object simulator 930 may be used in the case where the purpose of the first machine learning performed by the first learning apparatus 920 is procurement of the capability for controlling the operation or the state of an object (the case where the above-described first creation processing or second creation processing is performed). The object simulator 930 holds a simulation model of the above-described object 230 or object 530, provides this simulation model with the output data generated by the first artificial intelligence, and generates the results of observation of its operation or state. That is, the object simulator 930 realizes, with simulation, the above-described combination of the object 230 and the observation apparatus 240 or the combination of the object 530 and the observation apparatus 540. However, when an actual device is used as the object 230 or the object 530, the object simulator 930 can be removed.

The output data storage apparatus 950 may be the same as or similar to the above-described output data storage apparatus 550 or output data storage apparatus 750.

The learning request apparatus 280 receives specification data relating to second machine learning and a learning start command as the learning request from the user terminal 990. The learning request apparatus 280 transfers the specification data and the learning start command to the second learning apparatus 270. Also, the learning request apparatus 280 may receive the specification data relating to first machine learning and a learning start command as the learning request from the user terminal 990. In this case, the learning request apparatus 280 transfers the specification data and the learning start command to the first learning apparatus 920.

The user terminal 990 requests the service provision system to provide machine learning suitable for the purpose of the user. The user terminal 990 issues the specification data relating to the second machine learning based on an input made by the user and the learning start command, and transfers these to the learning request apparatus 280. The specification data may include values indicating the structure, applications, the purpose of the object, or the load resistance performance of the object.

As described above, the (second) learning data creation apparatus according to the present embodiment creates (second) learning data used in second machine learning for procuring the capability for judging the validity of the output from the second artificial intelligence (artificial intelligence) in which the learning result of the first machine learning executed for the first artificial intelligence is set. Specifically, this learning data creation apparatus acquires, from data relating to the first artificial intelligence and/or data relating to the second artificial intelligence, judgment material data (for learning) selected based on the specification of a required judgment capability, and regards the acquired judgment material data as data input to the third artificial intelligence on which the second machine learning is executed. Then, this learning data creation apparatus creates learning data including this judgment material data and the training data that indicates the correct value of the result of judgment of the validity of the output from the second artificial intelligence based on this judgment material data. Therefore, according to this learning data creation apparatus, it is possible to create the learning data used in the second machine learning for procuring the judgment capability that coincides with the specification.

Also, this learning data creation apparatus controls, based on the specification of a required judgment capability, what type of data needs to be acquired as the judgment material data (for learning) and what type of (second) learning data needs to be created based on this judgment material data. Therefore, according to this learning data creation apparatus, it is possible to create the learning data for procuring a wide judgment capability that is not limited to a specific judgment capability.

### §4 Modifications

Although embodiments of the present disclosure have been described above in detail, the above-description is merely examples of the present disclosure in all aspects. It will be appreciated that various improvement and modifications can be made without departing from the scope of the present invention. For example, changes can be made as follows. Note that with regard to constituent elements similar to those of the above-described embodiments, similar reference numerals are used and a description is omitted as appropriate.

### 4.1

A (second) learning data creation apparatus according to the present embodiment controls, based on the specification of a required judgment capability, what type of data needs to be acquired as the judgment material data (for learning) and what type of (second) learning data needs to be created based on this judgment material data. However, such control may be performed outside the learning data creation apparatus. That is, a plurality of learning data creation apparatuses that execute different types of creation processing may be prepared. Alternatively, even without premising such control, this learning data creation apparatus is useful in that the learning data used in the second machine learning for procuring a specific judgment capability can be created. In view of this, the second learning data creation apparatus according to this modification (also referred to as "the present modification" hereinafter) acquires predetermined judgment material data (for learning) and creates second learning data based on this judgment material data in accordance with a predetermined algorithm.

As shown in FIG. 13, a second learning data creation apparatus 1000 according to the present modification includes an acquisition unit 1001 and a creation unit 1002. The hardware configuration of the second learning apparatus 1000 may be the same as or similar to the hardware configuration of the second learning data creation apparatus described with reference to FIG. 3.

The acquisition unit 1001 may be an input apparatus, a communication interface, or an external interface, for example. The acquisition unit 1001 acquires, as judgment material data for learning, predetermined data from the data relating to the output from the first artificial intelligence and the data relating to the output from the second artificial intelligence. The acquisition unit 1001 transfers the judgment material data for learning to the creation unit 1002.

The creation unit 102 may be a processor and a memory, for example. The creation unit 1002 receives the judgment material data for learning from the acquisition unit 101, and creates second learning data based on the judgment material data for learning. Similarly to the embodiment above, the second learning data includes the judgment material data for learning and training data indicating the correct value of the result of judgment of the validity of the output from the first artificial intelligence and/or the output from the second artificial intelligence based on this judgment material data for learning. It is determined in advance how the creation unit 1002 creates the learning data.

As described above, the (second) learning data creation apparatus according to the present modification creates (second) learning data used in second machine learning for procuring the capability for judging the validity of the output from the second artificial intelligence in which the learning result of the first machine learning executed for the first artificial intelligence is set. Specifically, this learning data creation apparatus acquires predetermined judgment material data (for learning) from data relating to the first artificial intelligence and/or data relating to the second artificial intelligence, and regards the acquired judgment material data as data input to the third artificial intelligence on which the second machine learning is executed. Then, this learning data creation apparatus creates learning data including this judgment material data and the training data that indicates the correct value of the result of judgment of the validity of the output from the second artificial intelligence based on this judgment material data. Therefore, according to this learning data creation apparatus, it is possible to create the learning data used in the second machine learning for procuring a specific judgment capability.

Also, it is determined in advance what type of data this learning data creation apparatus needs to acquire, as the judgment material data (for learning), and what type of (second) learning data this learning data creation apparatus needs to create based on the judgment material data. Therefore, according to this learning data creation apparatus, it is possible to create the learning data for procuring a specific judgment capability by executing one of the first creation processing to the third creation processing that have been described in the embodiments, for example.

Note that the embodiments described above are merely examples of the present disclosure in all aspects. It will be appreciated that various improvements and modifications can be made without departing from the scope of the present disclosure. That is, when the present disclosure is implemented, a specific configuration according to an embodiment may also be adopted as appropriate. Although data appearing in each embodiments is described in natural language, more specifically, data is designated using a computer recognizable pseudo-language, commands, parameters, and machine language, for example.

Part or all of the above-described embodiments can be described as shown below in addition to the claims, but are not limited thereto.

### Additional Remark 1

A control system including:
a control apparatus; and
a judgment apparatus,
in which the control apparatus includes a first memory and a first processor connected to the first memory,
the first processor is configured to implement a control artificial intelligence configured to generate output data for controlling an object based on input data,
the judgment apparatus includes a second memory and a second processor connected to the second memory,
the second processor is configured to
   (a) acquire judgment material data that is used to judge a validity of an output from the control artificial intelligence and
   (b) implement a judgment artificial intelligence configured to judge the validity based on the judgment material data,
a learning result of first machine learning for procuring a control capability for controlling the object is set in the control artificial intelligence,
a learning result of second machine learning for procuring a judgment capability for judging the validity is set in the judgment artificial intelligence,
the second machine learning is performed using learning data including a combination of judgment material data for learning that is created from data relating to an output from an artificial intelligence on which the first machine learning is being executed or data relating to an output from an artificial intelligence in which the learning result of the first machine learning is set, and training data indicating a correct value of a result of judgment of the validity based on the judgment material data for learning, and
the judgment material data for learning is selected, based on a specification of the judgment capability, from data relating to an output from an artificial intelligence on which the first machine learning is being executed or data relating to an output from an artificial intelligence in which the learning result of the first machine learning is set.

### Additional Remark 2

A learning data creation apparatus configured to create learning data that is used in second machine learning for procuring a judgment capability for judging a validity of an output from an artificial intelligence in which a learning result of first machine learning is set, the learning data creation apparatus including:
a memory; and
a processor connected to the memory,
in which the processor is configured to
   (a) acquire data relating to an output from a first artificial intelligence on which the first machine learning is being executed or data relating to an output from a second artificial intelligence in which the learning result of the first machine learning is set, and
   (b) create learning data including a combination of judgment material data for learning that is data to be input to a judgment artificial intelligence that is subjected to the second machine learning, and training data indicating a correct value of data output from the judgment artificial intelligence in correspondence with the input data, based on the data acquired by the acquisition unit and a specification of the judgment capability.

### Additional Remark 3

A learning apparatus including:
a memory; and
a processor connected to the memory,
in which the processor is configured to
   (a) acquire learning data that is used in second machine learning for procuring a judgment capability for judging a validity of an output from an artificial intelligence in which a learning result of first machine learning is set, and
   (b) performs the second machine learning for a judgment artificial intelligence using the learning data,
the learning data includes a combination of judgment material data for learning that is data to be input to the judgment artificial intelligence, and training data indicating a correct value of data output from the judgment artificial intelligence in correspondence with the input data, and
the learning data is created based on a specification of the judgment capability and data relating to an output from a first artificial intelligence on which the first machine learning is being executed or data relating to an output from a second artificial intelligence in which the learning result of the first machine learning is set.

### Additional Remark 4

A judgment apparatus including:
a memory; and
a processor connected to the memory,
in which the processor is configured to
   (a) acquire data relating to an output from an artificial intelligence in which a learning result of first machine learning is set, and
   (b) implement a judgment artificial intelligence configured to receive input data that is based on the data acquired by the acquisition unit and judge a validity of an output from the artificial intelligence,
a learning result of second machine learning for procuring a judgment capability for judging the validity is set in the judgment artificial intelligence,
the second machine learning is performed using learning data including a combination of judgment material data for learning that is created from data relating to an output from a first artificial intelligence on which the first machine learning is being executed or data relating to an output from a second artificial intelligence in which the learning result of the first machine learning is set, and training data indicating a correct value of a result of judgment of the validity based on the judgment material data for learning, and
the judgment material data for learning is selected, based on the judgment capability, from data relating to an output from an artificial intelligence on which the first machine learning is being executed or data relating to an output from an artificial intelligence in which the learning result of the first machine learning is set.

### LIST OF REFERENCE NUMERALS

100, 1000 Second learning data creation apparatus
101, 271, 1001, 1201, 1330, 1431 Acquisition unit
102, 1002, 1432 Creation unit
103, 1301, 1433, 1501 Controller
200, 500, 700, 900 First learning data creation apparatus
210, 510, 710, 910 First learning data storage apparatus
220, 520, 720, 920 First learning apparatus
230, 530, 1310, 1410 Object
240, 540 Observation apparatus
250 Observation data storage apparatus
260 Second learning data storage apparatus
270 Second learning apparatus
272, 1450 Learning unit
280Learning request apparatus
550, 750, 950 Output data storage apparatus
930 Object simulator
990 User terminal
1200, 1320 Judgment apparatus
1202, 1340 Judgment unit
1300 Control apparatus
1302, 1400 Control AI
1341, 1460 Judgment AI
1350 Warning unit
1360 Intervention unit
1420 Judgment artificial intelligence generation apparatus
1440 Learning data storage unit
1470 Learning result storage unit
1502 Storage unit
1503 Communication I/F
1504 Input apparatus
1505 Output apparatus
1506 External I/F
1507 Drive
1508 Storage medium

## Claims

1. A control system comprising:
a control apparatus (1300); and
a judgment apparatus (1320),
wherein the control apparatus (1300) includes a controller (1301) including a control artificial intelligence (1302) configured to generate output data for controlling an object based on input data,
the judgment apparatus (1320) includes
an acquisition unit (1330) configured to acquire judgment material data that is used to judge a validity of an output from the control artificial intelligence (1302), and
a judgment unit (1340) including a judgment artificial intelligence (1341) configured to judge the validity based on the judgment material data,
a learning result of first machine learning for procuring a control capability for controlling the object is set in the control artificial intelligence (1302),
a learning result of second machine learning for procuring a judgment capability for judging the validity is set in the judgment artificial intelligence (1341),
the second machine learning is performed using learning data including a combination of judgment material data for learning that is created from data relating to an output from an artificial intelligence on which the first machine learning is being executed or data relating to an output from an artificial intelligence in which the learning result of the first machine learning is set, and training data indicating a correct value of a result of judgment of the validity based on the judgment material data for learning, and
the judgment material data for learning is selected, based on a specification of the judgment capability, from data relating to an output from an artificial intelligence on which the first machine learning is being executed and data relating to an output from an artificial intelligence in which the learning result of the first machine learning is set.

2. The control system according to claim 1,
wherein the judgment apparatus (1320) further includes a warning unit (1350) configured to issue a warning if it is judged that the output from the control artificial intelligence (1302) is not valid.

3. The control system according to claim 1,
wherein the judgment apparatus (1320) further includes an intervention unit (1360) configured to intervene in a control of the object by the control apparatus (1300) if it is judged that the output from the control artificial intelligence (1302) is not valid.

4. A learning data creation apparatus (100) configured to create learning data that is used in second machine learning for procuring a judgment capability for judging a validity of an output from an artificial intelligence in which a learning result of first machine learning is set, the learning data creation apparatus comprising:
an acquisition unit (101) configured to acquire data relating to an output from a first artificial intelligence on which the first machine learning is being executed or data relating to an output from a second artificial intelligence in which the learning result of the first machine learning is set, and
a creation unit (102) configured to create learning data including a combination of judgment material data for learning that is data to be input to a judgment artificial intelligence (1341) that is subjected to the second machine learning, and training data indicating a correct value of data output from the judgment artificial intelligence (1341) in correspondence with the input data, the creation unit (102) creating the learning data based on the data acquired by the acquisition unit (101) and a specification of the judgment capability.

5. The learning data creation apparatus (100) according to claim 4,
wherein the judgment material data for learning includes at least one of (i) data output from the first artificial intelligence or the second artificial intelligence, (ii) observation data expressing a result of observation of an operation or a state of an object controlled based on the data output from the first artificial intelligence or the second artificial intelligence, and (iii) input data that has caused the second artificial intelligence to generate output data.

6. The learning data creation apparatus (100) according to claim 5,
wherein the creation unit (102) is configured to create the judgment material data for learning based on the observation data expressing the result of observation of the operation or the state of the object controlled based on the data output from the first artificial intelligence, and to create training data indicating that the output from the first artificial intelligence is not valid.

7. The learning data creation apparatus (100) according to claim 5,
wherein the creation unit (102) is configured to create the judgment material data for learning based on the data output from the first artificial intelligence, and to create training data indicating that the output from the first artificial intelligence is not valid.

8. The learning data creation apparatus (100) according to claim 5 or 7,
wherein the creation unit (102) is configured to create the judgment material data for learning based on the data output from the second artificial intelligence, and to create training data indicating that the output from the second artificial intelligence is valid.

9. The learning data creation apparatus (100) according to claim 5,
wherein the creation unit (102) is configured to create the judgment material data for learning based on the input data that has caused the second artificial intelligence to generate incorrect output data, and to create training data indicating that the output from the second artificial intelligence is not valid.

10. The learning data creation apparatus (100) according to claim 5 or 9,
wherein the creation unit (102) is configured to create the judgment material data for learning based on the input data that has caused the second artificial intelligence to generate correct output data, and to create training data indicating that the output from the second artificial intelligence is valid.

11. The learning data creation apparatus (100) according to any one of claims 4 to 10, further comprising
a controller (103) configured to control the data acquired by the acquisition unit (101) and the learning data created by the creation unit (102), based on the specification of the judgment capability.

12. A learning apparatus (270) comprising:
an acquisition unit (271) configured to acquire learning data that is used in second machine learning for procuring a judgment capability for judging a validity of an output from an artificial intelligence in which a learning result of first machine learning is set, and
a learning unit (272) configured to perform the second machine learning for a judgment artificial intelligence (1341) using the learning data,
wherein the learning data includes a combination of judgment material data for learning that is data to be input to the judgment artificial intelligence (1341) and training data indicating a correct value of data output from the judgment artificial intelligence (1341) in correspondence with the input data, and
the learning data is created based on a specification of the judgment capability and data relating to an output from a first artificial intelligence on which the first machine learning is being executed or data relating to an output from a second artificial intelligence in which the learning result of the first machine learning is set.

13. A judgment apparatus (1320) comprising:
an acquisition unit (1330) configured to acquire data relating to an output from an artificial intelligence in which a learning result of first machine learning is set, and
a judgment unit (1340) including a judgment artificial intelligence (1341) configured to receive input data that is based on the data acquired by the acquisition unit (1330) and judge a validity of the output from the artificial intelligence,
wherein a learning result of second machine learning for procuring a judgment capability for judging the validity is set in the judgment artificial intelligence (1341),
the second machine learning is performed using learning data including a combination of judgment material data for learning that is created from data relating to an output from a first artificial intelligence on which the first machine learning is being executed or data relating to an output from a second artificial intelligence in which the learning result of the first machine learning is set, and training data indicating a correct value of a result of judgment of the validity based on the judgment material data for learning, and
the judgment material data for learning is selected, based on the judgment capability, from data relating to an output from an artificial intelligence on which the first machine learning is being executed and data relating to an output from an artificial intelligence in which the learning result of the first machine learning is set.

14. The judgment apparatus (1320) according to claim 13, further comprising:
a warning unit (1350) configured to issue a warning if it is judged that the output from the artificial intelligence is not valid.

15. The judgment apparatus (1320) according to claim 13,
wherein the artificial intelligence is configured to generate output data for controlling an object based on input data, and
the judgment apparatus (1320) further includes an intervention unit (1360) configured to intervene in a control of the object based on the output from the artificial intelligence if it is judged that the output from the artificial intelligence is not valid.
